# FASCICULE DE BREVET EUROPEEN

(11) **EP 3 390 536 B1**
(45) Date de publication et mention de la délivrance du brevet: **16.10.2019**
(21) Numéro de dépôt: 16825826.7
(22) Date de dépôt: 12.12.2016
(51) Int. Cl.: C08L 61/12, C08G 8/04, C08J 3/24, C08J 5/04, B60C 1/00, C08L 7/00, C08L 9/00

(54) **COMPOSITION DE CAOUTCHOUC À HAUTE FLUIDITÉ À BASE D'UN ALDÉHYDE AROMATIQUE ET D'UN POLYPHÉNOL AROMATIQUE**
KAUTSCHUKZUSAMMENSETZUNG MIT HOHER FLIESSFÄHIGKEIT BASIEREND AUF EINEM AROMATISCHEN ALDEHYD UND EINEM AROMATISCHEN POLYPHENOL
RUBBER COMPOSITION WITH A HIGH LEVEL OF FLUIDITY BASED ON AN AROMATIC ALDEHYDE AND AN AROMATIC POLYPHENOL

(30) Priorité: 14.12.2015 FR 1562292; 14.12.2015 FR 1562293
(43) Date de publication de la demande: 24.10.2018
(73) Titulaire: Compagnie Générale des Etablissements Michelin, 63000 Clermont-Ferrand (FR)
(72) Inventeur: THUILLIEZ, Anne-Lise, 63040 Clermont-Ferrand Cedex 9 (FR); GAVARD-LONCHAY, Odile, 63040 Clermont-Ferrand Cedex 9 (FR); DOISNEAU, David, 63040 Clermont-Ferrand Cedex 9 (FR); LOUBAT, Cédric, 34160 Castries (FR); CROUZET, Quentin, 34160 Castries (FR)
(74) Mandataire: Desbordes, Guillaume
(86) Numéro de dépôt international: PCT/FR2016/053329
(87) Numéro de publication internationale: WO 2017/103404

(56) Documents cités:
- WO-A1-2013/017422
- WO-A1-2015/118042
- US-A1- 2011 038 815

## Description

L'invention concerne des compositions de caoutchouc, un procédé de fabrication de ces compositions, un composite de caoutchouc et un pneumatique.

Il est connu d'utiliser dans certaines parties des pneumatiques, des compositions de caoutchouc présentant une forte rigidité lors de faibles déformations du pneumatique. La résistance aux faibles déformations est une des propriétés que doit présenter un pneumatique pour répondre aux sollicitations auxquelles il est soumis.

Une forte rigidité peut être obtenue en utilisant un système de vulcanisation dit concentré, c'est-à-dire comprenant notamment des taux de soufre et d'accélérateur de vulcanisation relativement élevés.

Toutefois, un tel système de vulcanisation concentré pénalise le vieillissement à cru de la composition. Ainsi, lorsque la composition est sous forme de produit semi-fini, par exemple de bande de gomme, le soufre peut migrer en surface du produit semi-fini. Ce phénomène, appelé effleurissement, entraine une pénalisation du collant à cru du produit semi-fini lors de son stockage prolongé, avec pour conséquence une dégradation de l'adhésion entre les produits semi-finis lors de la fabrication du pneumatique.

Par ailleurs, le stockage de la composition crue contenant un système de vulcanisation concentré est susceptible d'entrainer une diminution de la phase retard de la composition lors de sa vulcanisation, c'est-à-dire le temps précédant le début de la vulcanisation. En conséquence, la composition peut commencer à cuire prématurément dans certains outils de mise en forme et la cinétique de vulcanisation est susceptible d'être modifiée et le rendement de vulcanisation d'être dégradé.

Un tel système de vulcanisation concentré pénalise également le vieillissement à cuit. En effet, on observe une dégradation des propriétés mécaniques de la composition cuite, notamment aux limites, par exemple de l'allongement à rupture.

Une forte rigidité peut autrement être obtenue en augmentant le taux de charge renforçante.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Enfin, une rigidité élevée peut être obtenue en incorporant certaines résines renforçantes comme divulgué dans WO 02/10269.

Classiquement l'augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisés pour designer des composés aptes à réagir ensemble pour générer par condensation une résine renforçante tridimensionnelle qui vient se superposer et s'interpénétrer avec le réseau charge renforçante/élastomère d'une part et, avec le réseau élastomère/soufre d'autre part (si l'agent de réticulation est le soufre). A l'accepteur de méthylène est associé un agent durcisseur, apte à le réticuler ou le durcir, encore appelé communément donneur de méthylène. Des exemples de tels accepteur et donneur de méthylène sont décrits dans WO 02/10269.

Les donneurs de méthylène classiquement utilisés dans les compositions de caoutchouc pour pneumatiques sont l'hexa-méthylènetétramine (en abrégé HMT), ou l'hexamethoxyméthylmélamine (en abrégé HMMM ou H3M), ou l'hexaethoxyméthylmélamine.

Les accepteurs de méthylène classiquement utilisés dans les compositions de caoutchouc pour pneumatiques sont des résines phénoliques précondensées.

Toutefois, la combinaison de résine phénolique classiquement utilisée en tant qu'accepteur de méthylene avec l'HMT ou l'H3M en tant que donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la règlementation européenne, sur ce type de composé.

L'invention a pour but de fournir une composition de caoutchouc rigidifiée au moyen de composés à faible impact environnemental.

A cet effet, l'invention a pour objet une composition de caoutchouc comprenant au moins une résine phénol-aldéhyde à base:
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W** : 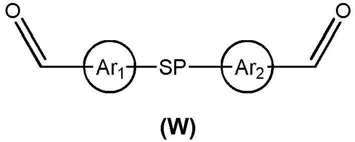 dans laquelle
   - chaque groupe Ar₁ et Ar₂ représente, indépendamment l'un de l'autre, un noyau aromatique, éventuellement substitué; et
   - SP est un groupe de liaison reliant au moins les groupes Ar₁ et Ar₂ entre eux, SP séparant les groupes Ar₁ et Ar₂ par au moins 2 liaisons covalentes.

La combinaison de l'aldéhyde et du polyphénol aromatique de la composition selon l'invention permet d'obtenir des compositions de caoutchouc présentant une rigidité à basse déformation équivalente voire largement améliorée par rapport aux compositions de caoutchouc classiques qui comprennent des donneurs de méthylène HMT ou H3M et par rapport aux compositions de caoutchouc dépourvues de résine renforçante.

Grâce à la structure particulière de l'aldéhyde de la résine phénol-aldéhyde, la fluidité de la composition de caoutchouc peut être modulée de façon à rendre cette dernière processable et à permettre sa mise en forme dans des conditions industrielles classiques. En effet, un problème lié à l'utilisation de certaines résines renforçantes de l'état de la technique est la diminution de la fluidité de la composition de caoutchouc à l'état cru. En effet, après l'étape de fabrication de la composition de caoutchouc comprenant les constituants de la résine renforçante, la composition à l'état cru est mise en forme par exemple par calandrage, par exemple sous la forme d'une feuille, d'une plaque, ou encore extrudée, par exemple pour former un profilé de caoutchouc. Or, en diminuant la fluidité de la composition de caoutchouc à l'état cru, certaines résines renforçantes de l'état de la technique gênent la mise en forme de la composition de caoutchouc dans des conditions industrielles classiques.

Les inventeurs à l'origine de l'invention émettent l'hypothèse que le groupe SP agit comme un groupe assouplissant structurellement l'aldéhyde et donc permettant d'augmenter la fluidité de la composition de caoutchouc. En outre, contrairement aux résines renforçantes de l'état de la technique, l'obtention de cette fluidité n'empêche pas d'obtenir des compositions de caoutchouc présentant une rigidité à basse déformation largement améliorée par rapport aux compositions de caoutchouc classiques. Ainsi, l'invention permet d'augmenter la fluidité sans réduire la rigidité, voire même tout en l'augmentant.

De plus, l'aldéhyde de formule **W** est très avantageux car il permet d'éviter la production de formaldéhyde contrairement aux donneurs de méthylène classiques. En effet, la combinaison de résine phénolique classiquement utilisée en tant qu'accepteur de méthylene avec l'HMT ou l'H3M en tant que donneur de méthylène dans l'état de la technique, produit du formaldéhyde au cours de la vulcanisation par cuisson de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la règlementation européenne, sur ce type de composé.

Par l'expression « résine à base de », il faut bien entendu comprendre une résine comportant le mélange et/ou le produit de réaction des différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi, on pourra également prévoir que le polyphénol aromatique et/ou l'aldéhyde de formule **W** est/sont issu(s) d'un précurseur respectivement de ce polyphénol aromatique et/ou l'aldéhyde de formule **W.**

Par « position méta l'un par rapport à l'autre », on entendra que les groupes hydroxyles -O-H sont portées par des carbones du noyau aromatique séparés l'un de l'autre par un unique autre carbone du noyau aromatique.

Par « en position ortho d'un groupe », on entendra la position occupée par le carbone du noyau aromatique immédiatement adjacent au carbone du noyau aromatique portant le groupe.

Par « noyau aromatique », on entend un cycle respectant la règle de Hückel. Des exemples de noyaux aromatiques sont les hydrocarbures aromatiques, substitués ou non, monocycliques ou polycycliques, tels que le benzène, les hétérocycles aromatiques, substitués ou non, monocycliques ou polycycliques, tels que le furane, le pyrrole, le thiophène et la pyridine.

Par « liaison covalente », on entend une liaison reliant deux atomes entre eux, chaque atome mettant en jeu un électron dans le cas d'une liaison simple et plusieurs dans le cas d'une liaison double ou triple. Ainsi, au sens de la présente invention, une liaison covalente peut être simple, double ou triple. En d'autres termes, SP comprend un premier atome relié au groupe Ar₁ et un deuxième atome relié au groupe Ar₂ respectivement par au moins une liaison, qu'elle soit simple, double ou triple, les premier et deuxième atomes pouvant être un unique et même atome. Ainsi, à titre d'exemple, dans le cas où SP représente un radical méthylène ou l'oxygène, SP est nécessairement relié à chaque groupe Ar₁ et Ar₂ par une liaison simple.

La composition de caoutchouc comprend donc au moins une (c'est-à-dire une ou plusieurs) résine phénol-aldéhyde; cette résine phénol-aldéhyde étant à base d'au moins un (c'est-à-dire un ou plusieurs) aldéhyde et au moins un (c'est-à-dire un ou plusieurs) polyphénol aromatique, constituants qui vont être décrits en détail ci-après.

Dans la présente description, sauf indication expresse différente, tous les pourcentages (%) indiqués sont des pourcentages en poids. Le sigle « pce » signifie parties en poids pour cent parties d'élastomère.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

L'invention a également pour objet une composition de caoutchouc comprenant :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W** : 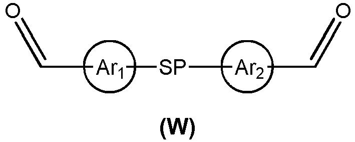 dans laquelle :
   - chaque groupe Ar₁ et Ar₂ représente, indépendamment l'un de l'autre, un noyau aromatique, éventuellement substitué; et
   - SP est un groupe de liaison reliant au moins les groupes Ar₁ et Ar₂ entre eux, SP séparant les groupes Ar₁ et Ar₂ par au moins 2 liaisons covalentes.

Un autre objet de l'invention est un procédé de fabrication d'une composition de caoutchouc à l'état cru, procédé comprenant une étape de mélangeage :
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W** : 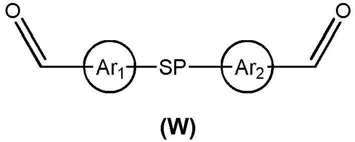 dans laquelle :
   - chaque groupe Ar₁ et Ar₂ représente, indépendamment l'un de l'autre, un noyau aromatique, éventuellement substitué; et
   - SP est un groupe de liaison reliant au moins les groupes Ar₁ et Ar₂ entre eux, SP séparant les groupes Ar₁ et Ar₂ par au moins 2 liaisons covalentes.

De préférence, durant l'étape de mélangeage, on mélange également au moins un élastomère à la composition.

Un autre objet de l'invention est un procédé de fabrication d'une composition de caoutchouc à l'état cuit, procédé comprenant :
- une étape de fabrication d'une composition de caoutchouc à l'état cru comprenant une étape de mélangeage :
   - d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
   - d'au moins un aldéhyde de formule **W** : 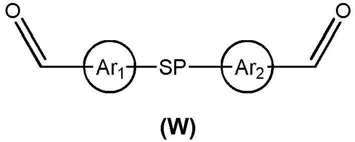 dans laquelle :
      - chaque groupe Ar₁ et Ar₂ représente, indépendamment l'un de l'autre, un noyau aromatique, éventuellement substitué; et
      - SP est un groupe de liaison reliant au moins les groupes Ar₁ et Ar₂ entre eux, SP séparant les groupes Ar₁ et Ar₂ par au moins 2 liaisons covalentes,
- puis, une étape de mise en forme de la composition de caoutchouc à l'état cru,
- puis, une étape de vulcanisation de la composition de caoutchouc durant laquelle on réticule une résine phénol-aldéhyde à base du polyphénol aromatique et de l'aldéhyde.

Alternativement, l'étape de réticulation par vulcanisation ou cuisson peut être remplacée par une étape de réticulation utilisant un autre système de réticulation que le soufre.

Encore un autre objet de l'invention est une composition de caoutchouc susceptible d'être obtenue par un procédé tel que décrit ci-dessus.

L'invention a encore pour objet l'utilisation d'un aldéhyde de formule **W** : 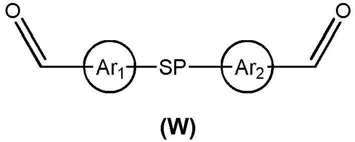 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
dans une composition de caoutchouc comprenant une résine phénol-aldéhyde à base d'au moins un polyphénol aromatique et d'au moins l'aldéhyde pour augmenter la rigidité de la composition de caoutchouc.

L'invention porte également sur l'utilisation de l'aldéhyde de formule **W** : 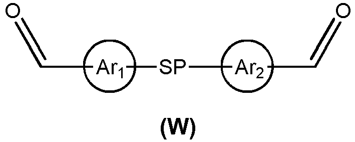 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
pour augmenter la fluidité à l'état cru d'une composition de caoutchouc comprenant une résine phénol-aldéhyde à base d'au moins un polyphénol aromatique et d'au moins l'aldéhyde.

L'invention a encore pour objet l'utilisation de l'aldéhyde de formule **W** : 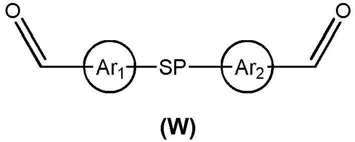 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes
pour maintenir la rigidité avec l'augmentation de la température d'une composition de caoutchouc comprenant une résine phénol-aldéhyde à base d'au moins un polyphénol aromatique et d'au moins l'aldéhyde.

L'invention a aussi pour objet un composite de caoutchouc renforcé d'au moins un élément de renfort noyé dans une composition de caoutchouc telle que décrite ci-dessus.

Un autre objet de l'invention est un pneumatique comprenant une composition de caoutchouc telle que décrite ci-dessus ou un composite de caoutchouc tel que décrit ci-dessus.

Par composition de caoutchouc, on entend que la composition comprend au moins un élastomère ou un caoutchouc (les deux termes étant synonymes) et au moins un autre composant. Une composition de caoutchouc comprend donc une matrice d'élastomère ou de caoutchouc dans laquelle est dispersé au moins l'autre composant. Une composition de caoutchouc est dans un état plastique à l'état cru (non-réticulé) et dans un état élastique à l'état cuit (réticulé) mais en aucun cas dans un état liquide. Une composition de caoutchouc ne doit pas être confondue avec un latex d'élastomère qui est une composition dans un état liquide comprenant un solvant liquide, généralement de l'eau, et au moins un élastomère ou un caoutchouc dispersé dans le solvant liquide de façon à former une émulsion. Ainsi, la composition de caoutchouc n'est pas une composition adhésive aqueuse.

### Aldéhyde de la composition de caoutchouc

Conformément à l'invention, la composition comprend un ou plusieurs aldéhyde(s) de formule **W.**

Le groupe de liaison SP, par définition divalent, sépare les groupes Ar₁ et Ar₂ par au moins 2 liaisons covalentes, c'est-à-dire que le chemin le plus court pour relier les groupes Ar₁ et Ar₂ entre eux comporte au moins 2 liaisons covalentes, chacune de ces liaisons covalentes pouvant être, indépendamment l'une de l'autre, une liaison simple, double ou triple. SP comprend donc implicitement au moins un atome relié d'une part à Ar₁ et d'autre part à Ar₂.

De préférence, SP représente un radical au moins divalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Le groupe de liaison SP est préférentiellement dépourvu de fonction réactive vis-à-vis du polyphénol aromatique.

Le groupe de liaison SP est préférentiellement dépourvu de fonction réactive vis-à-vis des autres constituants de la composition de caoutchouc.

Par fonction réactive, on entend ici une fonction qui réagirait dans des conditions réactionnelles nécessaires à la réticulation de la résine phénol-aldéhyde.

Dans un mode de réalisation, l'aldéhyde est de formule **W1** : 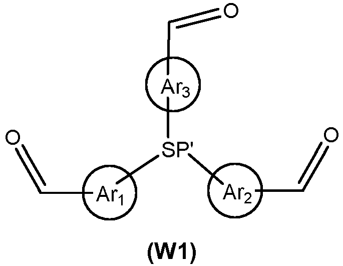 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

Un tel aldéhyde présente un groupe SP ramifié permettant de créer un noeud de réticulation supplémentaire dans le réseau créé par la résine phénol-aldéhyde. Ainsi, on augmente la rigidité à cuit de la composition de caoutchouc.

De préférence, SP' représente un radical au moins trivalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Avantageusement, dans ce mode de réalisation où l'aldéhyde est de formule **W1,** le groupe SP' représente un groupe de formule SP1 : 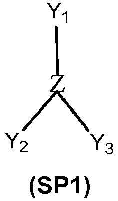 avec Y₁, Y₂, Y₃ représentant chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe C=O, un groupe S=O et un groupe SO₂ et plus préférentiellement Y₁, Y₂, Y₃ représentant chacun l'oxygène. Dans ce mode de réalisation, Y₁, Y₂, Y₃ relient de préférence directement Z et respectivement Ar₁, Ar₂, Ar₃.

Avantageusement, dans cet autre mode de réalisation où l'aldéhyde est de formule **W1,** SP représente un groupe de formule **SP1** : 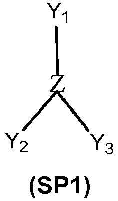 avec Z représentant un radical trivalent choisi dans le groupe constitué par un radical hydrocarboné et un radical hydrocarboné substitué. Un tel radical trivalent peut éventuellement être interrompu par un ou plusieurs hétéroatomes, de préférence un ou plusieurs hétéroatomes sélectionnés dans le groupe constitué par O, S, Si et P.

Avantageusement, Z représente un radical trivalent choisi dans le groupe constitué par :
- les radicaux alkyltriyl, aryltriyl, arylalkyltriyl, alkylaryltriyl, cycloalkyltriyl, alcényltriyl,
- les radicaux 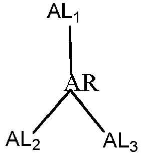 avec AL₁, AL₂, AL₃, représentant, indépendamment l'un de l'autre, un radical divalent alkylène et AR représentant un radical trivalent aryltriyl ;
- les radicaux 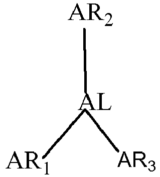 avec AR₁, AR₂, AR₃ représentant, indépendamment l'un de l'autre, un radical divalent arylène et AL représentant un radical trivalent alkyltriyl.

De préférence, Z représente un radical trivalent choisi dans le groupe constitué par :
- les radicaux alkyltriyl,
- les radicaux 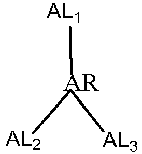 avec AL₁, AL₂, AL₃ représentant, indépendamment l'un de l'autre, un radical divalent alkylène et AR représentant un radical tétravalent aryltriyl
- les radicaux 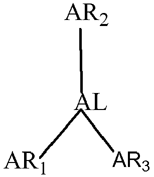 avec AR₁, AR₂, AR₃ représentant, indépendamment l'un de l'autre, un radical divalent arylène et AL représentant un radical trivalent alkyltriyl

Plus préférentiellement, Z représente un radical trivalent alkyltriyl.

Encore plus avantageusement, Z représente un radical trivalent alkyltriyl ramifié comprenant un nombre d'atomes de carbone allant de 1 à 15, de préférence de 2 à 12 et plus préférentiellement de 2 à 8.

Dans encore un autre mode de réalisation, l'aldéhyde est de formule **W2** : 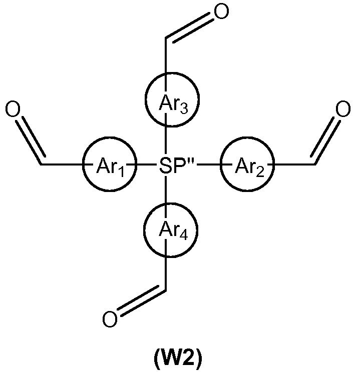 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

Un tel aldéhyde présente un groupe SP" ramifié permettant de créer un noeud de réticulation supplémentaire dans le réseau créé par la résine phénol-aldéhyde. Ainsi, on augmente la rigidité à cuit de la composition de caoutchouc.

De préférence, SP" représente un radical au moins divalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Avantageusement, dans cet autre mode de réalisation où l'aldéhyde est de formule **W2,** le groupe SP" représente un groupe de formule **SP2** : 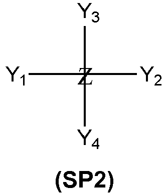 avec Y₁, Y₂, Y₃, Y₄ représentant chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe C=O, un groupe S=O et un groupe SO₂ et plus préférentiellement Y₁, Y₂, Y₃, Y₄ représentant chacun l'oxygène. Dans ce mode de réalisation, Y₁, Y₂, Y₃ et Y₄ relient de préférence directement Z et respectivement Ar₁, Ar₂, Ar₃ et Ar₄.

Avantageusement, dans cet autre mode de réalisation où l'aldéhyde est de formule **W2,** SP représente un groupe de formule **SP2** : 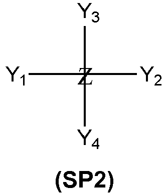 avec Z représentant un radical tétravalent choisi dans le groupe constitué par un radical hydrocarboné et un radical hydrocarboné substitué. Un tel radical tétravalent peut éventuellement être interrompu par un ou plusieurs hétéroatomes, de préférence un ou plusieurs hétéroatomes sélectionnés dans le groupe constitué par O, S, Si et P.

Avantageusement, Z représente un radical tétravalent choisi dans le groupe constitué par :
- les radicaux alkyltétrayl, aryltétrayl, arylalkyltétrayl, alkylaryltétrayl, cycloalkyltétrayl, alcényltétrayl,
- les radicaux 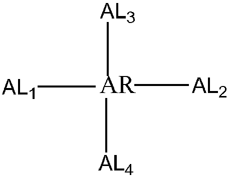 avec AL₁, AL₂, AL₃, AL₄ représentant, indépendamment l'un de l'autre, un radical divalent alkylène et AR représentant un radical tétravalent aryltétrayl et
- les radicaux 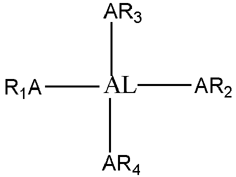 avec AR₁, AR₂, AR₃, AR₄ représentant, indépendamment l'un de l'autre, un radical divalent arylène et AL représentant un radical tétravalent alkyltétrayl,

De préférence, Z représente un radical tétravalent choisi dans le groupe constitué par :
- les radicaux alkyltétrayl,
- les radicaux 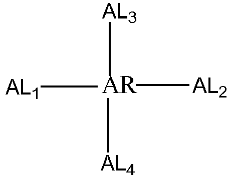 avec AL₁, AL₂, AL₃, AL₄ représentant, indépendamment l'un de l'autre, un radical divalent alkylène et AR représentant un radical tétravalent aryltétrayl et
- les radicaux 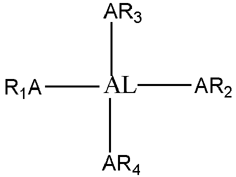 avec AR₁, AR₂, AR₃, AR₄ représentant, indépendamment l'un de l'autre, un radical divalent arylène et AL représentant un radical tétravalent alkyltétrayl.

Plus préférentiellement, Z représente un radical tétravalent alkyltétrayl.

Encore plus avantageusement, Z représente un radical tétravalent alkyltétrayl ramifié comprenant un nombre d'atomes de carbone allant de 1 à 15, de préférence de 2 à 12 et plus préférentiellement de 2 à 8.

Avantageusement, SP sépare les groupes Ar₁ et Ar₂ par un nombre de liaisons covalentes inférieur ou égal à 150, de préférence inférieur ou égal à 100 et plus préférentiellement inférieur ou égal à 75. Dans les modes de réalisation utilisant des aldéhydes de formule **W1** et **W2,** chaque groupe SP' et SP " sépare deux à deux les groupes Ar₁, Ar₂ et Ar₃ et Ar₁, Ar₂, Ar₃ et Ar₄ respectivement par un nombre de liaisons covalentes inférieur ou égal à 150, de préférence inférieur ou égal à 100 et plus préférentiellement inférieur ou égal à 75. La tenue en température, c'est-à-dire le maintien de la rigidité avec l'augmentation de la température, de la composition de caoutchouc diminue lorsque la distance entre les noyaux aromatiques devient trop élevée. Ainsi, en fonction de l'utilisation de la composition de caoutchouc, on pourra choisir une distance adaptée. Préférentiellement, pour certaines utilisations en pneumatique, on souhaite une tenue en température relativement élevée.

Avantageusement, SP sépare les groupes Ar₁ et Ar₂ par un nombre de liaisons covalentes supérieur ou égal à 3, de préférence supérieur ou égal à 4 et plus préférentiellement supérieur ou égal à 5. Dans les modes de réalisation utilisant des aldéhydes de formule **W1** et **W2,** chaque groupe SP' et SP " sépare deux à deux les groupes Ar₁, Ar₂ et Ar₃ et Ar₁, Ar₂, Ar₃ et Ar₄ respectivement par un nombre de liaisons covalentes supérieur ou égal à 3, de préférence supérieur ou égal à 4 et plus préférentiellement supérieur ou égal à 5. La fluidité de la composition de caoutchouc augmente lorsque la distance entre les noyaux aromatiques devient relativement grande. Ainsi, en fonction de l'utilisation de la composition de caoutchouc, on pourra choisir une distance adaptée.

Dans un mode de réalisation, SP sépare les groupes Ar₁ et Ar₂ par un nombre de liaisons covalentes inférieur ou égal à 20, de préférence inférieur ou égal à 15. Dans les modes de réalisation utilisant des aldéhydes de formule **W1** et **W2,** chaque groupe SP' et SP" sépare deux à deux les groupes Ar₁, Ar₂ et Ar₃ et Ar₁, Ar₂, Ar₃ et Ar₄ respectivement par un nombre de liaisons covalentes inférieur ou égal à 20, de préférence inférieur ou égal à 15. Dans ce mode de réalisation, on favorise le compromis entre la fluidité, la rigidité et la tenue en température de la composition.

Dans un autre mode de réalisation, SP sépare les groupes Ar₁ et Ar₂ par un nombre de liaisons covalentes strictement supérieur à 15. Dans les modes de réalisation utilisant des aldéhydes de formule **W1** et **W2,** chaque groupe SP' et SP" sépare deux à deux les groupes Ar₁, Ar₂ et Ar₃ et Ar₁, Ar₂, Ar₃ et Ar₄ respectivement par un nombre de liaisons covalentes strictement supérieur à 15. Dans ce mode de réalisation, on favorise le compromis entre la fluidité et la rigidité de la composition.

Avantageusement, SP comprend au moins 2 liaisons simples successives, de préférence au moins 5 liaisons simples successives, plus préférentiellement par au moins 10 liaisons simples successives. Dans les modes de réalisation utilisant des aldéhydes de formule **W1** et **W2,** chaque groupe SP' et SP " sépare deux à deux les groupes Ar₁, Ar₂ et Ar₃ et Ar₁, Ar₂, Ar₃ et Ar₄ respectivement par au moins 2 liaisons simples successives, de préférence au moins 5 liaisons simples successives, plus préférentiellement par au moins 10 liaisons simples successives. Pour un nombre de liaisons covalentes données, plus le nombre de liaisons simples est important, plus on augmente la fluidité, et ce, sans pour autant diminuer la rigidité, même voire en l'augmentant.

Dans un mode de réalisation, SP sépare les groupes Ar₁, Ar₂ par un nombre de liaisons simples successives inférieur ou égal à 20, de préférence inférieur ou égal à 15. Dans les modes de réalisation utilisant des aldéhydes de formule **W1** et **W2,** chaque groupe SP' et SP " sépare deux à deux les groupes Ar₁, Ar₂ et Ar₃ et Ar₁, Ar₂, Ar₃ et Ar₄ respectivement par un nombre de liaisons simples successives inférieur ou égal à 20, de préférence inférieur ou égal à 15.

Dans un autre mode de réalisation, SP sépare les groupes Ar₁, Ar₂ par un nombre de liaisons simples successives strictement supérieur à 15. Dans les modes de réalisation utilisant des aldéhydes de formule **W1** et **W2,** chaque groupe SP' et SP " sépare deux à deux les groupes Ar₁, Ar₂ et Ar₃ et Ar₁, Ar₂, Ar₃ et Ar₄ respectivement par un nombre de liaisons simples successives strictement supérieur à 15.

Avantageusement, dans un mode de réalisation, la masse molaire de l'aldéhyde de formule **W** est inférieure ou égale à 500 g.mol⁻¹.

Avantageusement, dans un autre mode de réalisation, la masse molaire de l'aldéhyde de formule **W** est inférieure ou égale à 10000 g.mol⁻¹, de préférence inférieure ou égale à 5000 g.mol⁻¹, et plus préférentiellement inférieure ou égale à 2000 g.mol⁻¹.

Avantageusement, l'aldéhyde est de formule **W3** : 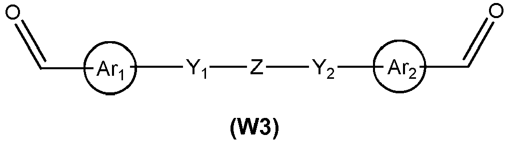 dans laquelle Y₁-Z-Y₂ représente un radical divalent avec Y₁ et Y₂ représentant chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe C=O, un groupe S=O et un groupe SO₂ et plus préférentiellement Y₁ et Y₂ représentant chacun l'oxygène.

Dans un mode de réalisation particulièrement préféré, Y₁ et Y₂ sont identiques.

Avantageusement, l'aldéhyde est de formule **W3** : 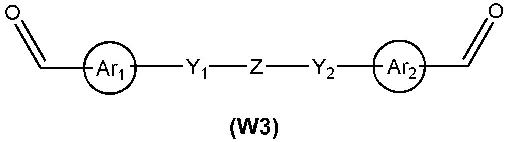 dans laquelle Y₁-Z-Y₂ représente un radical divalent avec Z représentant un radical divalent choisi dans le groupe constitué par un radical hydrocarboné et un radical hydrocarboné substitué. Un tel radical divalent peut éventuellement être interrompu par un ou plusieurs hétéroatomes, de préférence un ou plusieurs hétéroatomes sélectionnés dans le groupe constitué par O, S, Si et P.

Avantageusement, Z représente un radical divalent choisi dans le groupe constitué par les radicaux alkylène, arylène, arylalkylène, alkylarylène, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl.

De préférence, Z représente un radical divalent choisi dans le groupe constitué par les radicaux alkylène, AL-AR-AL avec AL représentant des radicaux monovalents alkyl et AR représentant un groupe aryl, AR-AL-AR avec AR représentant des radicaux monovalents aryl et AL représentant un groupe alkyl.

Plus préférentiellement Z représente un radical divalent alkylène.

Encore plus avantageusement, Z représente un radical divalent alkylène linéaire comprenant un nombre d'atomes de carbone allant de 1 à 15, de préférence de 2 à 12 et plus préférentiellement de 2 à 8.

Avantageusement, SP représente un radical choisi dans le groupe constitué par les radicaux polyester, polyéther, polydiène, polyalkylène et polysilicone et les associations de ces radicaux, de préférence dans le groupe constitué par les radicaux polyéther et polysilicone et les associations de ces radicaux.

Par radical polyester, on entend un radical comprenant un motif répétitif comprenant une chaine principale, la chaine principale de ce motif comprenant au moins une fonction ester. Par chaine principale, on entend la succession d'atomes la plus courte reliant les motifs deux à deux entre eux. Dans un mode de réalisation, le radical polyester est un radical d'un homopolyester aliphatique. De tels radicaux sont choisi dans le groupe constitué par les radicaux du polyglycolide (PGA), du poly(acide lactique) (PLA), du polycaprolactone (PCL).

Dans un autre mode de réalisation, le radical polyester est un radical d'un copolyester aliphatique. De tels radicaux sont choisis dans le groupe constitué par les radicaux du polyéthylène adipate (PEA) et du polybutylène succinate (PBS).

Dans encore un autre mode de réalisation, le radical polyester est un radical d'un copolyester semi-aromatique. De tels radicaux sont choisis dans le groupe constitué par les radicaux du polytéréphtalate d'éthylène (PET), du polytéréphtalate de butylène (PBT), du polytéréphtalate de triméthylène (PTT) et du polyéthylène naphtalate (PEN).

Dans encore un autre mode de réalisation, le radical polyester est un radical d'un homo-copolyester aromatique, tel que les radicaux des polyarylates.

Par radical polyéther, on entend un radical comprenant un motif répétitif comprenant une chaine principale, la chaine principale de ce motif comprenant au moins une fonction éther. Par chaine principale, on entend la succession d'atomes la plus courte reliant les motifs deux à deux entre eux.

De préférence, le radical polyéther est de formule O-[Z₄-O-]ₙ, dans lequel Z₄ est un radical divalent choisi dans le groupe constitué par un radical hydrocarboné et un radical hydrocarboné substitué. Un tel radical peut éventuellement être interrompu par un ou plusieurs hétéroatomes, de préférence un ou plusieurs hétéroatomes sélectionnés dans le groupe constitué par O, S, Si et P. L'aldéhyde de formule **W** présente alors la formule **W4** suivante : 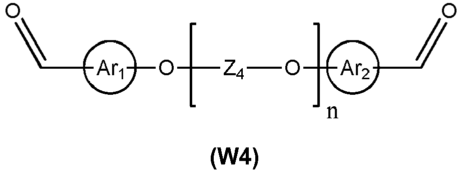 dans laquelle n est supérieur ou égal à 1 et de préférence, supérieur ou égal à 2.

De préférence Z₄ représente un radical divalent choisi dans le groupe constitué par les radicaux alkylène, arylène, arylalkylène, alkylarylène, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl.

Pus préférentiellement Z₄ représente un radical divalent alkylène.

Encore plus préférentiellement, Z₄ représente un radical divalent alkylène linéaire.

Par radical polydiène, on entend un radical comprenant un motif répétitif comprenant une chaine principale, la chaine principale de ce motif comprenant au moins une fonction alcène non aromatique. Par fonction alcène non aromatique, on entend que la fonction alcène n'appartient pas à un noyau aromatique. Par chaine principale, on entend la succession d'atomes la plus courte reliant les motifs deux à deux entre eux.

Par radical polyalkylène, on entend un radical comprenant un motif répétitif comprenant une chaine principale, la chaine principale de ce motif comprenant au moins un radical alkyl, linéaire ou ramifié, éventuellement substitué par un ou plusieurs cycles aromatiques. Par chaine principale, on entend la succession d'atomes la plus courte reliant les motifs deux à deux entre eux.

Par radical polysilicone, on entend un radical comprenant un motif répétitif comprenant une chaine principale, la chaine principale de ce motif comprenant au moins un radical siloxane. Par chaine principale, on entend la succession d'atomes la plus courte reliant les motifs deux à deux entre eux.

De préférence, le radical polysilicone est de formule **Z₅**:

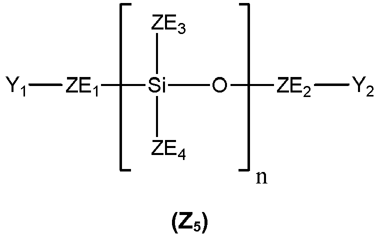

L'aldéhyde de formule **W** présente alors la formule **W5** suivante : 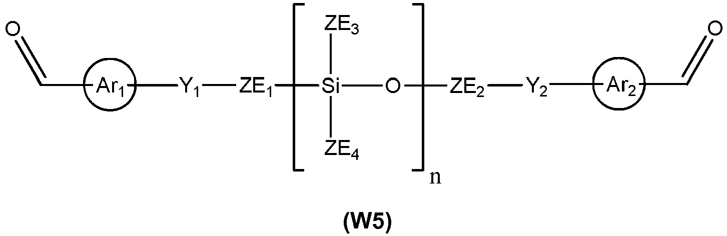 dans laquelle n est supérieur ou égal à 1 et de préférence, supérieur ou égal à 2

Dans un mode de réalisation, le composé **W5** est un mélange de composés de formule **W5,** mélange dans lequel plusieurs composés de formule **W5** présentant respectivement des valeurs entières de n différentes peuvent être mélangés. L'homme du métier comprend que pour de tels mélanges, le composé de formule **W5** présente une valeur de n non entière égale à la moyenne molaire pondérée de l'ensemble des composés de formule **W5** dans le mélange de composés.

Avantageusement, Y₁ et Y₂ représentent chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe C=O, un groupe S=O et un groupe SO₂ et plus préférentiellement Y₁ et Y₂ représentent chacun l'oxygène.

Avantageusement, chaque radical ZE₁, ZE₂ représente, indépendamment l'un de l'autre un radical divalent choisi dans le groupe constitué par un radical hydrocarboné et un radical hydrocarboné substitué. Un tel radical peut éventuellement être interrompu par un ou plusieurs hétéroatomes, de préférence un ou plusieurs hétéroatomes sélectionnés dans le groupe constitué par O, S, Si et P. Optionnellement, chaque radical ZE₁, ZE₂ représente, indépendamment l'un de l'autre, un radical divalent choisi dans le groupe constitué par les radicaux alkylène, arylène, arylalkylène, alkylarylène, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl.

De préférence, chaque radical ZE₁, ZE₂ représente, indépendamment l'un de l'autre, un radical divalent choisi dans le groupe constitué par les radicaux alkylène, AL-AR-AL avec AL représentant des radicaux monovalents alkyl et AR représentant un groupe aryl, AR-AL-AR avec AR représentant des radicaux monovalents aryl et AL représentant un groupe alkyl.

Plus préférentiellement chaque radical ZE₁, ZE₂ représente un radical divalent alkylène et encore plus préférentiellement chaque radical ZE₁, ZE₂ représente un radical divalent alkylène linéaire. Par exemple, chaque radical ZE₁, ZE₂ représente, indépendamment l'un de l'autre, un radical choisi dans le groupe constitué par les radicaux méthylène, éthylène, propylène et butylène.

Avantageusement, chaque radical ZE₃, ZE₄ représente, indépendamment l'un de l'autre, un radical monovalent choisi dans le groupe constitué par un radical hydrocarboné et un radical hydrocarboné substitué. Un tel radical peut éventuellement être interrompu par un ou plusieurs hétéroatomes, de préférence un ou plusieurs hétéroatomes sélectionnés dans le groupe constitué par O, S, Si et P. Optionnellement, chaque radical ZE₃, ZE₄ représente, indépendamment l'un de l'autre, un radical monovalent choisi dans le groupe constitué par les radicaux alkyle, aryle, arylalkyle, alkylaryle, cycloalkyle, alcényle, et plus préférentiellement chaque radical ZE₃, ZE₄, représente un radical monovalent alkyl. Par exemple, chaque radical ZE₃, ZE₄ représente, indépendamment l'un de l'autre, un radical choisi dans le groupe constitué par les radicaux méthyle, éthyle, propyle et butyle. Les radicaux propyle comprennent les radicaux de formule -C₃H₇. Ces radicaux sont le n-propyl et l'isopropyl. Les radicaux butyle comprennent les radicaux de formule -C₄H₉. Ces radicaux sont le n-butyl, isobutyl, le sec-butyl et le tert-butyl.

Dans un mode de réalisation, le reste de chaque noyau aromatique Ar₁, Ar₂ est non substitué. De préférence, dans ce mode de réalisation, lorsque chaque noyau aromatique Ar₁, Ar₂ est un noyau benzénique, l'aldéhyde est de formule **W6** :

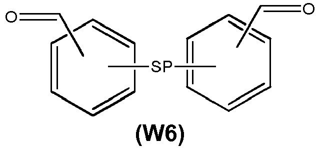

Dans un autre mode de réalisation, chaque noyau aromatique Ar₁, Ar₂ est substitué respectivement par au moins un groupe K₁, K₂ représentant, indépendamment l'un de l'autre, un radical monovalent choisi dans le groupe constitué par un radical hydrocarboné et un radical monovalent hydrocarboné substitué. Un tel radical monovalent peut éventuellement être interrompu par un ou plusieurs hétéroatomes, de préférence un ou plusieurs hétéroatomes sélectionnés dans le groupe constitué par O, S, Si et P. De préférence chaque groupe K₁, K₂ représente, indépendamment l'un de l'autre, un radical monovalent alkyle ou un radical monovalent O-alkyle. De préférence, dans ce mode de réalisation, lorsque chaque noyau aromatique Ar₁, Ar₂ est un noyau benzénique, l'aldéhyde est de formule **W7** :

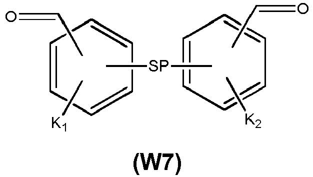

Dans un mode de réalisation, chaque groupe K₁, K₂ et le groupe SP sont situés en position ortho l'un par rapport l'autre sur chaque noyau aromatique benzénique Ar₁, Ar₂.

De façon préférée, qu'il soit ou non substitué, chaque noyau aromatique Ar₁, Ar₂ est un noyau benzénique. Dans un mode de réalisation, le groupe SP et le groupe CHO sont situés en position para l'un par rapport à l'autre sur chaque noyau aromatique Ar₁ et Ar₂. Dans un mode de réalisation préféré et afin d'augmenter la rigidité de la composition, le groupe SP et le groupe CHO sont situés en position ortho l'un par rapport à l'autre sur chaque noyau aromatique Ar₁ et Ar₂. Dans un mode de réalisation encore plus préféré et afin d'augmenter davantage la rigidité de la composition, le groupe SP et chaque groupe CHO sont situés en position méta l'un par rapport à l'autre sur chaque noyau aromatique Ar₁ et Ar₂.

Dans certains des modes de réalisation utilisant des aldéhydes de formule **W1,** le reste de chaque noyau aromatique Ar₁, Ar₂ et Ar₃ est non substitué. De préférence, dans ce mode de réalisation, lorsque chaque noyau aromatique Ar₁, Ar₂ et Ar₃ est un noyau benzénique, l'aldéhyde est de formule **W8** :

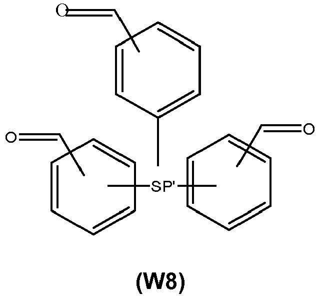

Dans un autre mode de réalisation, chaque noyau aromatique Ar₁, Ar₂ et Ar₃ est substitué respectivement par au moins un groupe K₁, K₂ et K₃ représentant, indépendamment l'un de l'autre, un radical monovalent choisi dans le groupe constitué par un radical hydrocarboné et un radical monovalent hydrocarboné substitué. Un tel radical monovalent peut éventuellement être interrompu par un ou plusieurs hétéroatomes, de préférence un ou plusieurs hétéroatomes sélectionnés dans le groupe constitué par O, S, Si et P. De préférence chaque groupe K₁, K₂ et K₃ représente, indépendamment l'un de l'autre, un radical monovalent alkyle ou un radical monovalent O-alkyle. De préférence, dans ce mode de réalisation, lorsque chaque noyau aromatique Ar₁, Ar₂ et Ar₃ est un noyau benzénique, l'aldéhyde est de formule **W9** :

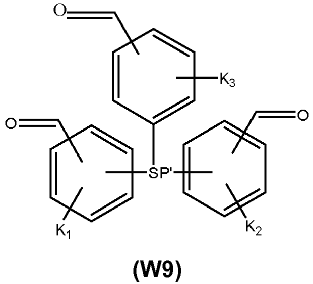

Dans un mode de réalisation, chaque groupe K₁, K₂ et K₃ et chaque groupe SP' sont situés en position ortho l'un par rapport l'autre sur chaque noyau aromatique benzénique Ar₁, Ar₂ et Ar₃.

De façon préférée, qu'il soit ou non substitué, chaque noyau aromatique Ar₁, Ar₂ et Ar₃ est un noyau benzénique. Dans un mode de réalisation, le groupe SP' et le groupe CHO sont situés en position para l'un par rapport à l'autre sur chaque noyau aromatique Ar₁, Ar₂, et Ar₃. Dans un mode de réalisation préféré et afin d'augmenter la rigidité de la composition, le groupe SP' et le groupe CHO sont situés en position ortho l'un par rapport à l'autre sur chaque noyau aromatique Ar₁, Ar₂ et Ar₃. Dans un mode de réalisation encore plus préféré et afin d'augmenter davantage la rigidité de la composition, le groupe SP' et le groupe CHO sont situés en position méta l'un par rapport à l'autre sur chaque noyau aromatique Ar₁, Ar₂, et Ar₃.

Dans certains des modes de réalisation utilisant des aldéhydes de formule W2, le reste de chaque noyau aromatique Ar₁, Ar₂, Ar₃ et Ar₄ est non substitué. De préférence, dans ce mode de réalisation, lorsque chaque noyau aromatique Ar₁, Ar₂, Ar₃ et Ar₄ est un noyau benzénique, l'aldéhyde est de formule **W10** :

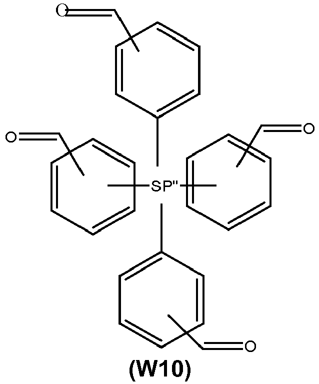

Dans un autre mode de réalisation, chaque noyau aromatique Ar₁, Ar₂, Ar₃ et Ar₄ est substitué respectivement par au moins un groupe K₁, K₂, K₃ et K₄ représentant, indépendamment l'un de l'autre, un radical monovalent choisi dans le groupe constitué par un radical hydrocarboné et un radical monovalent hydrocarboné substitué. Un tel radical monovalent peut éventuellement être interrompu par un ou plusieurs hétéroatomes, de préférence un ou plusieurs hétéroatomes sélectionnés dans le groupe constitué par O, S, Si et P. De préférence chaque groupe K₁, K₂, K₃ et K₄ représente, indépendamment l'un de l'autre, un radical monovalent alkyle ou un radical monovalent O-alkyle. De préférence, dans ce mode de réalisation, lorsque chaque noyau aromatique Ar₁, Ar₂, Ar₃ et Ar₄ est un noyau benzénique, l'aldéhyde est de formule **W11** :

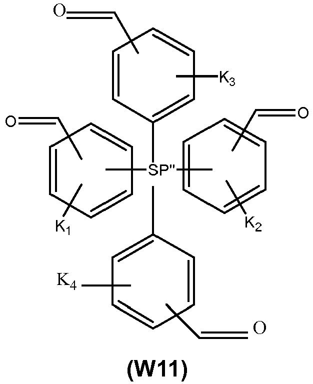

Dans un mode de réalisation, chaque groupe K₁, K₂, K₃ et K₄ et chaque groupe SP" sont situés en position ortho l'un par rapport l'autre sur chaque noyau aromatique benzénique Ar₁, Ar₂, Ar₃ et Ar₄.

De façon préférée, qu'il soit ou non substitué, chaque noyau aromatique Ar₁, Ar₂, Ar₃ et Ar₄ est un noyau benzénique. Dans un mode de réalisation, le groupe SP" et le groupe CHO sont situés en position para l'un par rapport à l'autre sur chaque noyau aromatique Ar₁, Ar₂, Ar₃ et Ar₄. Dans un mode de réalisation préféré et afin d'augmenter la rigidité de la composition, le groupe SP" et le groupe CHO sont situés en position ortho l'un par rapport à l'autre sur chaque noyau aromatique Ar₁, Ar₂, Ar₃ et Ar₄. Dans un mode de réalisation encore plus préféré et afin d'augmenter davantage la rigidité de la composition, le groupe SP" et le groupe CHO sont situés en position méta l'un par rapport à l'autre sur chaque noyau aromatique Ar₁, Ar₂, Ar₃ et Ar₄.

Dans un mode de réalisation, la résine phénol-aldéhyde est à base d'un aldéhyde additionnel différent de l'aldéhyde de formule **W.** L'aldéhyde additionnel permet de moduler les propriétés de la composition de caoutchouc induites par l'introduction de la résine phénol-aldéhyde à base de l'aldéhyde de formule **W.**

Avantageusement, l'aldéhyde additionnel est un aldéhyde aromatique. De même que pour l'aldéhyde de formule **W,** un tel aldéhyde est très avantageux car il permet d'éviter la production de formaldéhyde contrairement aux donneurs de méthylène classiques. Un aldéhyde aromatique est un composé comprenant au moins un noyau aromatique, ce noyau aromatique portant au moins une (une ou plusieurs) fonction aldéhyde.

De préférence, l'aldéhyde aromatique est choisi dans le groupe constitué par le 1,3-benzène-dicarboxaldéhyde, le 1,4-benzène-dicarboxaldéhyde, un aldéhyde de formule **A** : 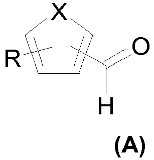 dans laquelle :
X comprend N, S ou O
R représente -H ou -CHO
et les mélanges de ces composés.

Préférentiellement, l'aldéhyde est de formule **A'**:

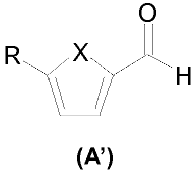

Encore plus préférentiellement, R représente -CHO.

Selon un mode de réalisation préférentiel, X représente O.

Dans une variante de l'aldéhyde de formule **A,** X représente O et R représente -H. L'aldéhyde utilisé est alors de formule **Ba:**

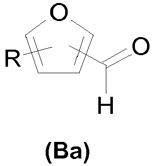

Dans une variante de l'aldéhyde de formule **A'**, X représente O et R représente -H. 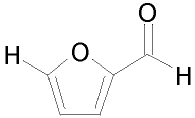 L'aldéhyde utilisé est alors le furfuraldéhyde et est de formule **B'a:**
**(B'a)**

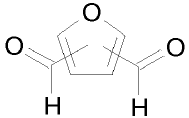

Dans une autre variante de l'aldéhyde de formule **A,** X représente O et R représente -CHO. L'aldéhyde utilisé est alors de formule **Bb:**
**(Bb)**

Dans une autre variante de l'aldéhyde de formule **A'**, X représente O et R représente -CHO. L'aldéhyde utilisé est alors le 2,5-furanedicarboxaldéhyde et est de formule **B'b:**

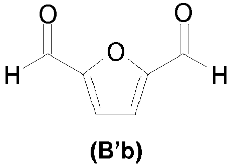

Dans un autre mode de réalisation, X comprend N.

Dans une variante de l'aldéhyde de formule **A,** X représente NH. L'aldéhyde utilisé est de formule **Ca:**

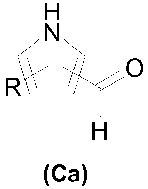

Dans une variante de l'aldéhyde de formule **A'**, X représente NH. L'aldéhyde utilisé est de formule **C'a:**

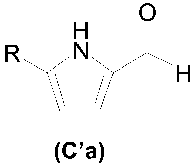

De préférence, R représente -CHO dans la variante de l'aldéhyde de formule **C'a** et l'aldéhyde obtenu est alors le 2,5-1H-pyrroledicarboxaldéhyde.

Dans une autre variante de l'aldéhyde de formule **A,** X représente NR1 avec R1 représentant un radical choisi dans le groupe constitué par les radicaux alkyle, aryle arylalkyle, alkylaryle, cycloalkyle. L'aldéhyde utilisé est de formule **Cb:**

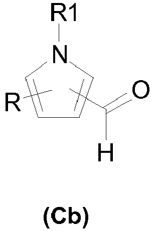

Dans un autre mode de réalisation, X comprend S.

Dans une variante de l'aldéhyde de formule **A,** X représente S. L'aldéhyde utilisé est de formule **Da:**

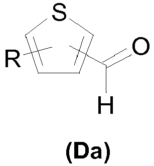

Dans une variante de l'aldéhyde de formule **A'**, X représente S. L'aldéhyde utilisé est de formule **D'a:**

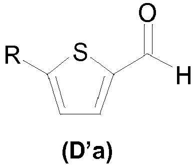

De préférence, R représente -CHO dans la variante de l'aldéhyde de formule **D'a** et est alors le 2,5-thiophènedicarboxaldéhyde.

Dans une autre variante de l'aldéhyde de formule **A,** X représente SR2 avec R2 représentant un radical choisi dans le groupe constitué par les radicaux alkyle, aryle arylalkyle, alkylaryle, cycloalkyle. L'aldéhyde utilisé est de formule **Db:**

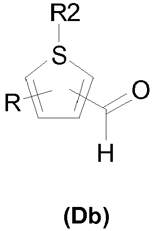

Dans encore une autre variante de l'aldéhyde de formule **A,** X représente R3-S-R2 avec R2, R3 représentant chacun indépendamment l'un de l'autre un radical choisi dans le groupe constitué par les radicaux alkyle, aryle arylalkyle, alkylaryle, cycloalkyle. L'aldéhyde utilisé est de formule **Dc**:

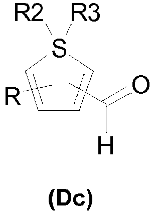

Dans encore une autre variante de l'aldéhyde de formule **A,** X représente S=O. L'aldéhyde utilisé est de formule **Dd:**

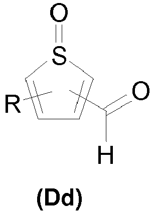

Dans encore une autre variante de l'aldéhyde de formule **A,** X représente O=S=O. L'aldéhyde utilisé est de formule **De:**

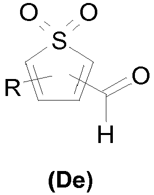

Parmi les différents modes de réalisation décrits ci-dessus, on préfèrera les modes de réalisation et les variantes dans lesquels X représente NH, S ou O. Dans ces modes de réalisation et variantes, on pourra avoir, conformément à l'invention, R représentant -H ou - CHO et de préférence R représentant -CHO. Dans ces modes de réalisation et variantes, on aura préférentiellement R en position 5 et le groupe -CHO en position 2 sur le noyau aromatique (formule **A'**).

Ainsi, plus préférentiellement, l'aldéhyde aromatique est choisi dans le groupe constitué par le 1,4-benzène-dicarboxaldéhyde, le furfuraldéhyde, le 2,5-furanedicarboxaldéhyde et les mélanges de ces composés.

De préférence, la composition de caoutchouc est dépourvue de formaldéhyde.

Lorsque la résine phénol-aldéhyde est à base de plusieurs aldéhydes dont l'un au moins est un aldéhyde de formule **W** tel que décrit ci-dessus, chaque aldéhyde autre que chaque aldéhyde de formule **W** tel que décrit ci-dessus est préférentiellement différent du formaldéhyde. La composition est alors également préférentiellement dépourvue de formaldéhyde.

En d'autres termes et de manière préférée, le ou chaque aldéhyde de la résine phénol-aldéhyde est différent du formaldéhyde.

Par dépourvue de formaldéhyde, on entend que le taux massique de formaldéhyde en poids total du ou des aldéhydes est strictement inférieur à 1%.

Dans certains modes de réalisation, la composition peut comprendre du formaldéhyde. De préférence, la composition comprend alors un taux massique de formaldéhyde en poids total du ou des aldéhydes inférieur ou égal à 10%, de préférence à 5% et plus préférentiellement à 2%.

### Procédé de fabrication de l'aldéhyde W3

Le procédé de fabrication de l'aldéhyde de formule **W3** : 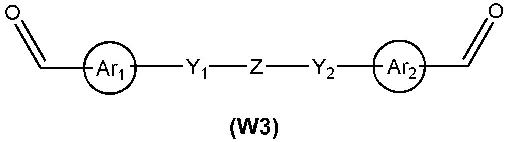 dans laquelle les noyaux Ar₁ et Ar₂ sont identiques, Y₁ et Y₂ représentent chacun l'oxygène, comprend une étape durant laquelle on fait réagir :
- un réactif de formule OHa-Z-OHa dans laquelle Ha représente un halogène, et
- un réactif de formule

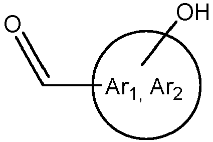

### Procédé de fabrication de l'aldéhyde W1

Le procédé de fabrication de l'aldéhyde de formule **W1** : 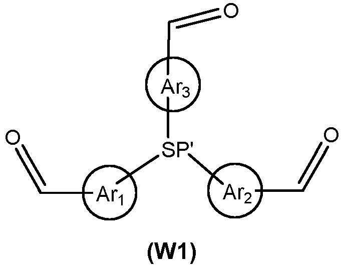 dans laquelle les noyaux Ar₁, Ar₂ et Ar₃ sont identiques, SP' représentant le groupe 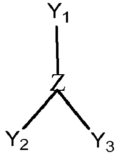 avec Y₁, Y₂, Y₃, représentant l'oxygène et reliant directement Z et respectivement Ar₁, Ar₂ et Ar₃, comprend une étape durant laquelle on fait réagir :
- un réactif de formule 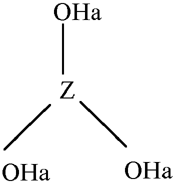 dans laquelle Ha représente un halogène, et
- un réactif de formule

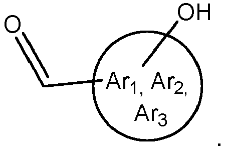

### Procédé de fabrication de l'aldéhyde W2

Le procédé de fabrication de l'aldéhyde de formule **W2** : 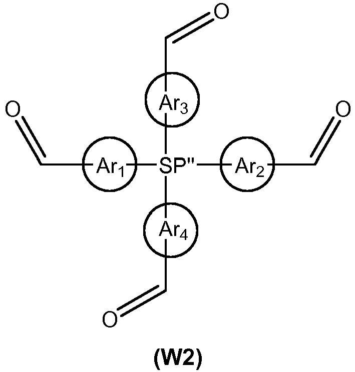 dans laquelle les noyaux Ar₁, Ar₂, Ar₃ et Ar₄ sont identiques, SP" représentant le groupe 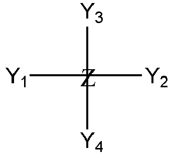 avec Y₁, Y₂, Y₃, Y₄ représentant l'oxygène et reliant directement Z et respectivement Ar₁, Ar₂, Ar₃ et Ar₄, comprend une étape durant laquelle on fait réagir :
- un réactif de formule 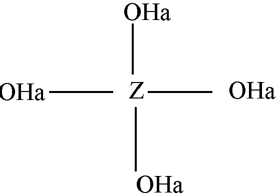 dans laquelle Ha représente un halogène, et
- un réactif de formule

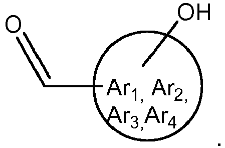

### Procédé de fabrication de l'aldéhyde de formule W4 selon l'invention

Le procédé de fabrication de l'aldéhyde de formule **W4** : 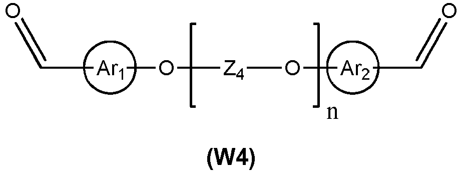 dans laquelle n est supérieur ou égal à 1 et de préférence, supérieur ou égal à 2, et dans lequel les noyaux Ar₁, Ar₂ sont identiques, comprend une étape C durant laquelle on fait réagir :
- un réactif de formule Ha-[Z₄-O]ₙ₋₁-Z₄-Ha dans laquelle Ha représente un halogène, et
- un réactif de formule

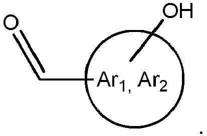

Dans un mode de réalisation, dans une étape B préalable à l'étape C, on fait réagir :
- un réactif de formule LG-[Z₄-O]ₙ₋₁-Z₄-LG, dans laquelle LG représente un groupe de formule V-SO₃- dans laquelle V représente un radical monovalent hydrocarboné ou un radical monovalent hydrocarboné substitué et
- un halogènure nucléophile.

Un halogénure nucléophile peut par exemple être un halogénure de lithium ou bien un halogénure d'hydrogène.

Dans un mode de réalisation, dans une étape A préalable à l'étape B, on fait réagir :
- un réactif de formule OH-[Z₄-O]ₙ₋₁-Z₄-OH, et
- un réactif de formule V-SO₂-Hb dans laquelle V représente un radical monovalent hydrocarboné ou un radical monovalent hydrocarboné substitué et Hb représente un halogène.

Avantageusement, V représente un radical monovalent choisi dans le groupe constitué par les radicaux alkyle, aryle, arylalkyle, alkylaryle, cycloalkyle, alcényle, de préférence V représente un radical monovalent alkyl et plus préférentiellement méthyle.

### Procédé de fabrication de l'aldéhyde de formule W5 selon l'invention

Le procédé de fabrication de l'aldéhyde de formule **W5** : 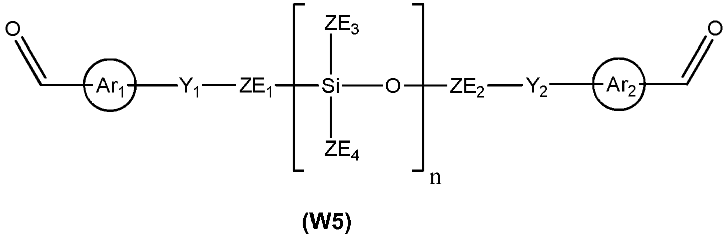 dans laquelle n est supérieur ou égal à 1 et de préférence, supérieur ou égal à 2 et dans lequel les noyaux Ar₁, Ar₂ sont identiques et Y₁, Y₂ représentant chacun l'oxygène, comprend une étape C durant laquelle on fait réagir :
- un réactif de formule Ha-ZE₁-[Si(ZE₃ZE₄)-O]ₙ-ZE₂-Ha dans laquelle Ha représente un halogène, et
- un réactif de formule

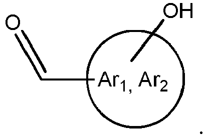

Dans un mode de réalisation, dans une étape B préalable à l'étape C, on fait réagir :
- un réactif de formule LG-ZE₁-[Si(ZE₃ZE₄)-O]ₙ-ZE₂-LG, dans laquelle LG représente un groupe de formule V-SO₃- dans laquelle V représente un radical monovalent hydrocarboné ou un radical monovalent hydrocarboné substitué et
- un halogènure nucléophile.

Un halogénure nucléophile peut par exemple être un halogénure de lithium ou bien un halogénure d'hydrogène.

Dans un mode de réalisation, dans une étape A préalable à l'étape B, on fait réagir :
- un réactif de formule HO-ZE₁-[Si(ZE₃ZE₄)-O]ₙ-ZE₂-OH, et
- un réactif de formule V-SO₂-Hb dans laquelle V représente un radical monovalent hydrocarboné ou un radical monovalent hydrocarboné substitué et Hb représente un halogène.

Avantageusement, V représente un radical monovalent choisi dans le groupe constitué par les radicaux alkyle, aryle, arylalkyle, alkylaryle, cycloalkyle, alcényle, de préférence V représente un radical monovalent alkyl et plus préférentiellement méthyle.

### Polyphénol aromatique de la composition de caoutchouc

Conformément à l'invention le polyphénol aromatique peut être, dans un mode de réalisation, une molécule simple comprenant un ou plusieurs noyaux aromatiques, au moins un de ces noyaux aromatiques, voire chaque noyau aromatique étant porteur d'au moins deux fonctions hydroxyle en position méta l'une par rapport à l'autre, les deux positions ortho d'au moins une des fonctions hydroxyle étant non substituées. Une telle molécule simple ne comprend pas de motif répétitif.

Conformément à l'invention, le polyphénol aromatique peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant une fonction aldéhyde, par exemple un aldéhyde aromatique porteur d'au moins une fonction aldéhyde, comprenant au moins un noyau aromatique mais alternativement un aldéhyde non aromatique, par exemple le formaldéhyde.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

Dans un autre mode de réalisation, le polyphénol aromatique est un mélange d'un polyphénol aromatique formant une molécule simple et d'une résine pré-condensée à base de polyphénol aromatique.

Dans les modes de réalisation particuliers qui suivent, on décrit le ou les noyaux aromatiques du polyphénol aromatique. Par souci de clarté, on y décrit le « polyphénol aromatique » sous sa forme de molécule simple. Ce polyphénol aromatique pourra ensuite être condensé et définira en partie le motif répétitif. Les caractéristiques de la résine pré-condensée sont décrites plus en détail par la suite.

Dans un mode de réalisation préféré, le noyau aromatique du polyphénol aromatique est porteur de trois groupes -O-H en position méta les uns par rapport aux autres.

De préférence, les deux positions ortho de chaque groupe -O-H du polyphénol aromatique sont non substituées. On entend par là que les deux atomes de carbone situés de part et d'autre (en position ortho) de l'atome de carbone porteur du groupe -O-H sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des groupes -O-H) sont porteurs d'un simple atome d'hydrogène.

Dans un mode de réalisation, le polyphénol aromatique comprend plusieurs noyaux aromatiques, au moins deux d'entre eux étant chacun porteur d'au moins deux groupes -OH en position méta l'un par rapport à l'autre, les deux positions ortho d'au moins un des groupes -O-H d'au moins un noyau aromatique étant non substituées.

Dans un mode de réalisation préféré, au moins un des noyaux aromatiques du polyphénol aromatique est porteur de trois groupes -O-H en position méta les uns par rapport aux autres.

De préférence, les deux positions ortho de chaque groupe -O-H d'au moins un noyau aromatique sont non substituées.

Encore plus préférentiellement, les deux positions ortho de chaque groupe -O-H de chaque noyau aromatique sont non substituées.

Avantageusement, le ou chaque noyau aromatique du polyphénol aromatique est un noyau benzénique.

A titre d'exemple de polyphénol aromatique comportant un seul noyau aromatique, on peut citer en particulier, le résorcinol et le phloroglucinol, de formules respectives **I** et **II** :

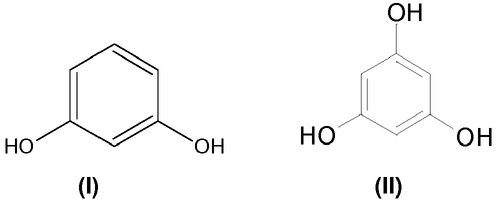

A titres d'exemples, dans le cas où le polyphénol aromatique comporte plusieurs noyaux aromatiques, au moins deux de ces noyaux aromatiques, identiques ou différents, sont choisis parmi ceux de formules générales : 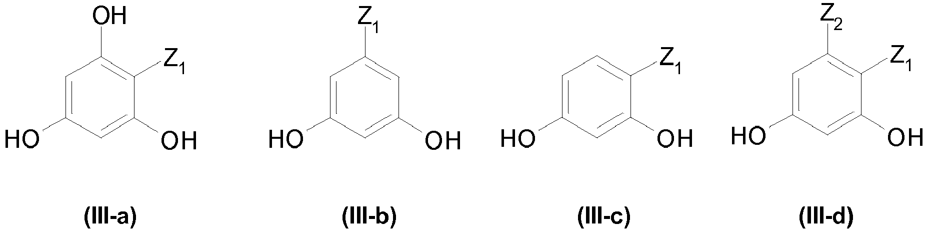 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide, ayant la formule suivante :

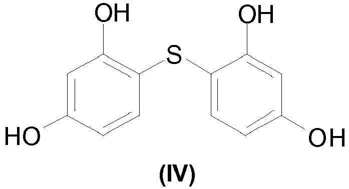

Un autre exemple de polyphénol aromatique est la 2,2',4,4'-tétrahydroxydiphényl benzophénone, de formule suivante :

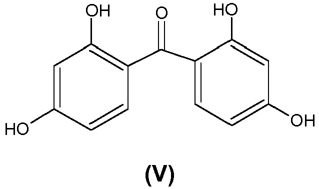

On note que chaque composé **IV** et **V** est un polyphénol aromatique comportant deux noyaux aromatiques (de formules **III-c**) dont chacun est porteur d'au moins deux (en l'occurrence de deux) groupes -O-H en position méta l'un par rapport à l'autre.

On note que dans le cas d'un polyphénol aromatique comportant au moins un noyau aromatique conforme à la formule **III-b,** les deux positions ortho de chaque groupe -O-H d'au moins un noyau aromatique sont non substituées. Dans le cas d'un polyphénol aromatique comportant plusieurs noyaux aromatiques conformes à la formule **III-b,** les deux positions ortho de chaque groupe -O-H de chaque noyau aromatique sont non substituées.

Selon un mode de réalisation de l'invention, le polyphénol aromatique est choisi dans le groupe constitué par le résorcinol **I,** le phloroglucinol **II,** le 2,2',4,4'-tétrahydroxydiphényl sulfide **IV,** la 2,2',4,4'-tétrahydroxybenzophenone **V** et les mélanges de ces composés. Dans un mode de réalisation particulièrement avantageux, le polyphénol aromatique est le phloroglucinol **II.**

Dans un mode de réalisation, le polyphénol aromatique comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol **I,** le phloroglucinol **II,** le 2,2',4,4'-tétrahydroxydiphényl sulfide **IV,** la 2,2',4,4'-tétrahydroxybenzophenone **V,** et leurs mélanges ; et
- d'au moins un composé comprenant une fonction aldéhyde, et préférentiellement un aldéhyde aromatique porteur d'au moins une fonction aldéhyde, comprenant au moins un noyau aromatique.

Avantageusement, le composé comprenant une fonction aldéhyde est choisi dans le groupe constitué par l'aldéhyde de formule **W**, l'aldéhyde de formule **W1**, l'aldéhyde de formule **W2,** le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Plus avantageusement, le composé comprenant une fonction aldéhyde est choisi dans le groupe constitué par le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, le composé comprenant une fonction aldéhyde est choisi dans le groupe constitué par le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec le polyphénol aromatique conforme à l'invention dans une étape ultérieure.

Le polyphénol aromatique peut également comprendre un mélange d'une molécule libre de polyphénol aromatique et d'une résine pré-condensée à base de polyphénol aromatique, telle que décrite précédemment. En particulier, le polyphénol aromatique peut également comprendre un mélange de phloroglucinol et d'une résine pré-condensée à base de phloroglucinol.

### Compositions de caoutchouc selon l'invention

En fonction de l'utilisation de la composition, on utilisera une quantité totale d'aldéhyde (aldéhyde de formule **W** et éventuellement aldéhyde additionnel) allant de 0,1 à 25 pce. De même, on utilisera une quantité de polyphénol aromatique allant de 0,1 à 25 pce.

Dans certains modes de réalisation, le ratio molaire [aldéhyde] :[polyphénol aromatique] varie avantageusement de 1 :10 à 5 :10.

Selon l'utilisation que l'on fait de la composition, la composition de caoutchouc présente, à l'état cuit, un module sécant à 10% d'allongement MA10 mesuré selon la norme ASTM D 412 de 1998 (éprouvette C) supérieur ou égal à 10 MPa, de préférence à 20 MPa, préférentiellement à 30 MPa, plus préférentiellement à 40 MPa et encore plus préférentiellement à 60 MPa.

De préférence, la composition de caoutchouc comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions de caoutchouc peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition de caoutchouc comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine de 5 à 120 pce, plus préférentiellement de 5 à 100 pce et encore plus préférentiellement de 5 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition de caoutchouc comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition de caoutchouc comprend un système de réticulation, plus préférentiellement de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Le soufre ou agent donneur de soufre est utilisé à un taux préférentiel compris dans un domaine de 0,5 à 10 pce, plus préférentiellement compris dans un domaine de 0,5 à 8,0 pce. L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans un mode de réalisation, la composition de caoutchouc se trouve à l'état cuit, c'est-à-dire vulcanisée. Dans d'autres modes de réalisation, la composition se trouve à l'état cru, c'est-à-dire non vulcanisée, la résine phénol-aldéhyde réticulée ayant été ajoutée ultérieurement à la composition non vulcanisée.

Dans un mode de réalisation, la résine phénol aldéhyde n'ayant pas encore réticulé, la composition de caoutchouc comprend :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W** : 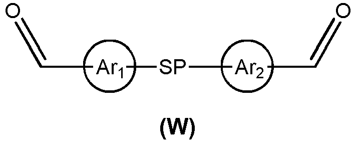 dans laquelle :
   - chaque groupe Ar₁ et Ar₂ représente, indépendamment l'un de l'autre, un noyau aromatique, éventuellement substitué; et
   - SP est un groupe de liaison reliant au moins les groupes Ar₁ et Ar₂ entre eux, SP séparant les groupes Ar₁ et Ar₂ par au moins 2 liaisons covalentes.

De façon analogue avec les aldéhydes de formule **W1,** la résine phénol aldéhyde n'ayant pas encore réticulé, la composition de caoutchouc comprend :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W1** : 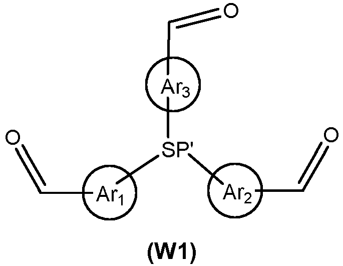 dans laquelle :
   - chaque groupe Ar₁, Ar₂, Ar₃ représente un noyau aromatique, éventuellement substitué ;
   - SP' relie les groupes Ar₁, Ar₂, et Ar₃ entre eux, SP' séparant deux à deux les groupes Ar₁, Ar₂, et Ar₃ par au moins 2 liaisons covalentes.

De façon analogue avec les aldéhydes de formule **W2,** la résine phénol aldéhyde n'ayant pas encore réticulé, la composition de caoutchouc comprend :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W2** : 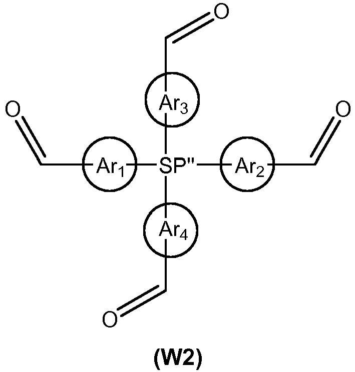 dans laquelle :
   - chaque groupe Ar₁, Ar₂, Ar₃ et Ar₄ représente, indépendamment l'un de l'autre, un noyau aromatique, éventuellement substitué ;
   - SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

De préférence, dans ce mode de réalisation, la composition est à l'état cru, c'est-à-dire non vulcanisée.

De préférence, la composition de caoutchouc peut être utilisée dans le pneumatique sous la forme d'une couche. Par couche, on entend tout élément tridimensionnel, de forme et d'épaisseur quelconques, notamment en feuille, bande ou autre élément de section droite quelconque, par exemple rectangulaire ou triangulaire.

Bien entendu, toutes les caractéristiques relatives au polyphénol aromatique et à l'aldéhyde de la composition comprenant la résine s'appliquent également à la composition comprenant le polyphénol aromatique et l'aldéhyde non réticulés à l'état de résine.

### Composite de caoutchouc selon l'invention

Le composite de caoutchouc est renforcé d'au moins un élément de renfort noyé dans la composition de caoutchouc selon l'invention.

Ce composite de caoutchouc peut être préparé selon un procédé comportant au moins les étapes suivantes :
- au cours d'une première étape, combiner au moins un élément de renfort avec une composition de caoutchouc (ou élastomère, les deux termes sont synonymes) pour former un composite de caoutchouc renforcé de l'élément de renfort;
- puis, au cours d'une deuxième étape, réticuler par cuisson, par exemple par vulcanisation, de préférence sous pression, le composite ainsi formé.

Parmi les éléments de renforts, on pourra citer les éléments de renfort textiles, métalliques ou hybrides textile-métal.

Par textile, on entend, de manière bien connue de l'homme du métier, tout matériau en matière autre que métallique, qu'elle soit naturelle comme synthétique, susceptible d'être transformée en fil, fibre par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par fil ou fibre, on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut s'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Les matériaux textiles peuvent être en matière organique ou polymérique, comme en matière inorganique.

A titre d'exemples de matières inorganiques, on citera le verre, le carbone.

L'invention est préférentiellement mise en oeuvre avec des matériaux en matière polymérique, du type thermoplastique comme non thermoplastique.

A titre d'exemples de matières polymériques du type non thermoplastique, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Par métallique, on entend par définition un ou des éléments filaires constitués majoritairement (c'est-à-dire pour plus de 50% de sa masse) ou intégralement (pour 100% de sa masse) d'un matériau métallique. De préférence, le matériau métallique est l'acier, plus préférentiellement en acier perlitique (ou ferrito-perlitique) au carbone comprenant avantageusement entre 0,4% et 1,2% en masse de carbone.

L'élément de renfort métallique peut être un monofilament, un câble comprenant plusieurs monofilaments métalliques ou un câble multi-torons comprenant plusieurs câbles alors appelés torons.

Dans le cas préféré où l'élément de renfort comprend plusieurs monofilaments métalliques ou plusieurs torons, les monofilaments métalliques ou les torons sont assemblés par retordage ou par câblage. On rappelle qu'il existe deux techniques possibles d'assemblage:
- soit par retordage : les monofilaments métalliques ou les torons subissent à la fois une torsion collective et une torsion individuelle autour de leur propre axe, ce qui génère un couple de détorsion sur chacun des monofilaments ou torons ;
- soit par câblage: les monofilaments métalliques ou les torons ne subissent qu'une torsion collective et ne subissent pas de torsion individuelle autour de leur propre axe.

De façon optionnelle, l'élément de renfort comprend plusieurs monofilaments et est du type gommé in situ, c'est-à-dire que l'élément de renfort est gommé de l'intérieur, pendant sa fabrication même par une gomme de remplissage. De tels éléments filaires métalliques sont connus de l'homme du métier. La composition de la gomme de remplissage peut être identique ou non à la composition de caoutchouc dans laquelle l'élément de renfort est noyé.

### Pneumatique selon l'invention

De tels pneumatiques sont par exemple ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

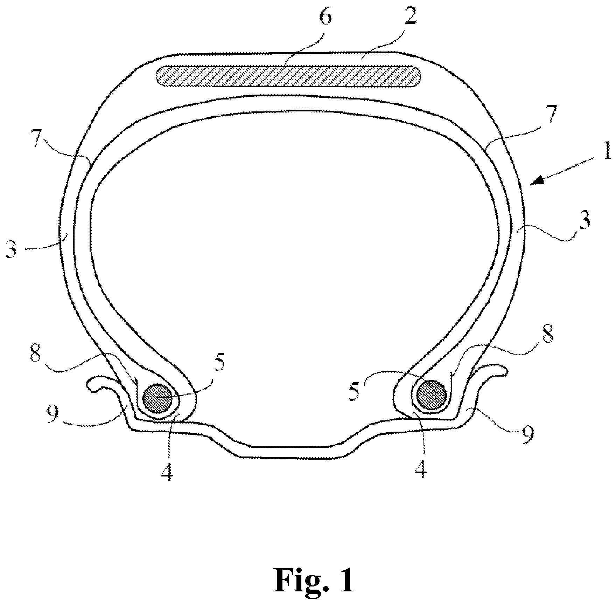

A titre d'exemple, la figure 1 annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte une composition de caoutchouc ou un composite selon l'invention. Bien entendu, l'invention concerne les objets précédemment décrits, à savoir le composite en caoutchouc et le pneumatique, tant à l'état cru (avant cuisson ou vulcanisation) qu'à l'état cuit (après cuisson).

### Procédé de fabrication de la composition selon l'invention

Le procédé de fabrication décrit précédemment et ci-après permet de fabriquer la composition selon l'invention.

De manière analogue au procédé de fabrication de la composition comprenant l'aldéhyde de formule **W**, l'invention a également pour objet un procédé de fabrication d'une composition de caoutchouc à l'état cru, le procédé comprenant une étape de mélangeage :
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W1** et/ou **W2**. De manière analogue au procédé de fabrication de la composition comprenant l'aldéhyde de formule **W**, l'invention a pour objet un procédé de fabrication d'une composition de caoutchouc à l'état cuit, le procédé comprenant :
   - une étape de fabrication d'une composition de caoutchouc à l'état cru comprenant une étape de mélangeage :
   - d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
   - d'au moins un aldéhyde de formule **W1** et/ou **W2**
- puis, une étape de mise en forme de la composition de caoutchouc à l'état cru,
- puis, une étape de vulcanisation de la composition de caoutchouc durant laquelle on réticule une résine phénol-aldéhyde à base du polyphénol aromatique et de l'aldéhyde.

La composition de caoutchouc peut être fabriquée dans des mélangeurs appropriés, en utilisant deux phases de préparation successives bien connues de l'homme du métier :
- une première phase de travail ou malaxage thermomécanique (phase dite "non-productive") à haute température, jusqu'à une température maximale comprise entre 110°C et 190°C, de préférence entre 130°C et 180°C,
- suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Dans un premier mode de réalisation, le procédé comporte les étapes suivantes :
- incorporer à un élastomère, au cours d'une première étape, une charge renforçante, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation, le polyphénol aromatique et l'aldéhyde, et éventuellement l'aldéhyde additionnel;
- malaxer le tout à une température inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante,...), puis dans un deuxième temps, par exemple après une à deux minutes de malaxage, les autres additifs, éventuels agents de recouvrement de la charge ou de mise en oeuvre complémentaires, à l'exception du système de réticulation, du polyphénol aromatique et de l'aldéhyde, et éventuellement de l'aldéhyde additionnel. La durée totale du malaxage, dans cette phase non-productive, est de préférence comprise entre 1 et 15 min.

Apres refroidissement du mélange ainsi obtenu, on incorpore alors dans un mélangeur externe tel qu'un mélangeur à cylindres, maintenu à basse température (par exemple entre 40°C et 100°C), le système de réticulation, l'aldéhyde, et éventuellement l'aldéhyde additionnel, et le polyphénol aromatique. L'ensemble est alors mélangé (phase productive) pendant quelques minutes, par exemple entre 2 et 15 min.

La composition ainsi obtenue à l'état cru peut ensuite être mise en forme, par exemple calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

Puis, après une éventuelle étape d'assemblage entre elles de plusieurs compositions mises en forme de nappes ou de bandes sous la forme d'un composite ou d'une ébauche crue de pneumatique, on procède à une étape de vulcanisation de la composition, du composite ou de l'ébauche durant laquelle on réticule la résine phénol-aldéhyde à base du polyphénol aromatique et de l'aldéhyde, et éventuellement de l'aldéhyde additionnel. On réalise l'étape de vulcanisation à une température supérieure ou égale à 120°C, de préférence supérieure ou égale à 140°C. On obtient la composition à l'état cuit.

Dans un deuxième mode de réalisation, le procédé comporte les étapes suivantes :
- incorporer à un élastomère, au cours d'une première étape, une charge renforçante, le polyphénol aromatique et l'aldéhyde, et éventuellement l'aldéhyde additionnel, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation;
- malaxer le tout à une température inférieure à 110°C.

### Utilisations selon l'invention

De façon analogue aux utilisations de l'aldéhyde de formule **W**, l'invention a également pour objets indépendants et distincts:
- l'utilisation d'un aldéhyde de formule **W1** et/ou **W2** dans une composition de caoutchouc comprenant une résine phénol-aldéhyde à base d'au moins un polyphénol aromatique et d'au moins l'aldéhyde pour augmenter la rigidité de la composition de caoutchouc,
- l'utilisation d'un aldéhyde de formule **W1** et/ou **W2** pour augmenter la fluidité à l'état cru d'une composition de caoutchouc comprenant une résine phénol-aldéhyde à base d'au moins un polyphénol aromatique et d'au moins l'aldéhyde.
- l'utilisation d'un aldéhyde de formule **W1** et/ou **W2** pour maintenir la rigidité avec l'augmentation de la température d'une composition de caoutchouc comprenant une résine phénol-aldéhyde à base d'au moins un polyphénol aromatique et d'au moins l'aldéhyde.

L'invention ainsi que ses avantages seront aisément compris à la lumière des exemples de réalisation qui suivent.

### Exemples de réalisation de l'invention et essais comparatifs

Ces essais démontrent que :
- la rigidité de la composition de caoutchouc selon l'invention est largement augmentée par rapport à une composition de caoutchouc dépourvue de résine renforçante ;
- la rigidité de la composition de caoutchouc selon l'invention peut être améliorée par rapport à une composition de caoutchouc utilisant une résine renforçante classique à base d'un accepteur de méthylene avec l'HMT ou l'H3M en tant que donneur de méthylène ;
- le maintien de la rigidité de la composition de caoutchouc selon l'invention aux températures élevées, en particulier pour des températures allant jusqu'à 150°C, est supérieur dans tous les modes de réalisation, à celui des compositions de caoutchouc dépourvues de résine renforçante ;
- la fluidité de la composition selon l'invention est améliorée par rapport à celle d'une composition comprenant un polyphénol aromatique et un aldéhyde présentant une structure non conforme à l'invention ;
- la résine phénol-aldéhyde de la composition utilisant l'aldéhyde est dépourvue de formaldéhyde et n'en génère pas lors de sa formation.

Pour cela, plusieurs compositions de caoutchouc, notées ci-après T0, T1 et T2 et I1 à I13 ont été préparées comme indiqué précédemment et sont rassemblées dans le tableau 1 annexé ci-après. Les compositions T0, T1 et T2 ne sont pas conformes à l'invention contrairement aux compositions I1 à I13 qui sont conformes à l'invention.

Toutes les compositions T0 à T2 et I1 à I13 ont une partie commune dans leurs formulations (exprimées en pce, parties en poids pour cent parties d'élastomère): 100 pce de caoutchouc naturel, 75 pce de noir de carbone N326, 1,5 pce de N-1, 3-diméthylbutyl-N-phényl-para-phénylènediamine, 1,5 pce d'acide stéarique, 5 pce de ZnO, 1 pce de N-tertiarybutyl-2-benzothiazole sulfamide et 2,5 pce de soufre insoluble 20H.

La composition T0 ne comprend aucune résine renforçante ajoutée à cette partie commune.

En plus de la partie commune, la composition T1 comprend une résine renforçante à base d'hexa-méthylènetétramine (1,6 pce) et d'une résine phénolique pré-condensée (4 pce). La composition T1 représente une composition classique de l'état de la technique présentant une rigidité supérieure à celle de la composition T0.

En plus de la partie commune, la composition T2 comprend une résine phénol-aldéhyde à base de phloroglucinol et de 1,4-benzène-dicarboxaldéhyde. La composition T2 comprend 14 pce de phloroglucinol et 4,85 pce de 1,4-benzène-dicarboxaldéhyde.

En plus de la partie commune, à l'état cru, chaque composition de caoutchouc I1 à I13 selon l'invention comprend:
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W.**

En plus de la partie commune, à l'état cuit, chaque composition de caoutchouc I1 à I13 selon l'invention comprend une résine phénol-aldéhyde à base :
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W.**

Le polyphénol aromatique de chaque composition de caoutchouc I1 à I13 est choisi dans le groupe constitué par le résorcinol, le phloroglucinol, le 2,2',4,4'-tétrahydroxydiphényl sulfide, le 2,2',4,4'-tétrahydroxybenzophénone et les mélanges de ces composés. Chaque polyphénol aromatique de chaque composition I1 à I13 selon l'invention comprend un unique noyau aromatique, ici benzénique, porteur de trois, et seulement trois, groupes -O-H en position méta l'un par rapport à l'autre pour les compositions I1 et I3 à I13 et porteur de deux, et seulement deux groupes -O-H en position méta l'un par rapport à l'autre pour la composition I2. Le reste du noyau aromatique du polyphénol aromatique est non substitué. En particulier, les deux positions ortho de chaque groupe -O-H sont non substituées. Enfin, en plus de la partie commune, chaque résine de chaque composition I7 à I9 est, en plus de l'aldéhyde de formule **W**, à base d'un aldéhyde additionnel, préférentiellement aromatique, choisi dans le groupe constitué par le 1,3-benzène-dicarboxaldéhyde, le 1,4-benzène-dicarboxaldéhyde, un aldéhyde de formule **A** : 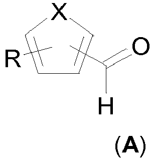 dans laquelle :
X comprend N, S ou O
R représente -H ou -CHO
et les mélanges de ces composés.

En l'espèce, l'aldéhyde additionnel est choisi dans le groupe constitué par le 1,4-benzène-dicarboxaldéhyde, le furfuraldéhyde, le 2,5-furanedicarboxaldéhyde et les mélanges de ces composés. Ici, l'aldéhyde additionnel de chaque composition I7 à I9 selon l'invention est le 1,4-benzène-dicarboxaldéhyde.

Chaque composition selon l'invention I1 à I13 comprend le polyphénol aromatique, l'aldéhyde de formule **W** et, l'aldéhyde additionnel pour les compositions I7 à I9, dans des proportions molaires indiqués dans le tableau 1 dans la colonne intitulée ratio molaire.

### Aldéhydes de formule W des compositions 11 à I13

Chaque aldéhyde des compositions I1 à I13 est tel que SP sépare les groupes Ar₁ et Ar₂ par un nombre de liaisons covalentes inférieur ou égal à 150, de préférence inférieur ou égal à 100 et plus préférentiellement inférieur ou égal à 75. Chaque aldéhyde des compositions I1 à I13 est également tel que SP sépare les groupes Ar₁ et Ar₂ par un nombre de liaisons covalentes supérieur ou égal à 3, de préférence supérieur ou égal à 4 et plus préférentiellement supérieur ou égal à 5. Selon les compositions, SP comprend au moins 2 liaisons simples successives, de préférence au moins 5 liaisons simples successives. SP représente un radical divalent choisi dans le groupe constitué par un radical hydrocarboné et un radical hydrocarboné substitué. Les aldéhydes des compositions I1 à I13 présentent tous une masse molaire inférieure ou égale à 10000 g.mol⁻¹, de préférence à 5000 g.mol⁻¹, et plus préférentiellement à 2000 g.mol⁻¹.

Chaque aldéhyde des compositions I1 à I13 est tel que chaque noyau aromatique Ar₁, Ar₂ est un noyau benzénique. A l'exception de l'aldéhyde de formule **W** de la composition I12, le reste de chaque noyau aromatique Ar₁, Ar₂ est non substitué.

A l'exception des aldéhydes des compositions I10 et I11, le groupe SP et le groupe CHO sont situés en position para l'un par rapport à l'autre sur chaque noyau aromatique Ar₁ et Ar₂.

### Aldéhydes de formule W des compositions 11 à 15 et 110 à I12

Chaque aldéhyde de formule **W** de chaque composition I1 à I5 et I10 à I12 est tel que la masse molaire de l'aldéhyde de formule **W** est inférieure ou égale à 500 g.mol⁻¹. De plus, SP sépare les groupes Ar₁ et Ar₂ par un nombre de liaisons covalentes inférieur ou égal à 20, de préférence inférieur ou égal à 15.

Chaque aldéhyde de formule **W** de chaque composition I1 à I5 et I10 à I12 est de formule **W3** dans laquelle Y₁-Z-Y₂ représente un radical divalent avec Y₁ et Y₂ représentant chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe C=O, un groupe S=O et un groupe SO₂ et plus préférentiellement Y₁ et Y₂ représentant chacun l'oxygène. Z représente un radical divalent choisi dans le groupe constitué par un radical hydrocarboné et un radical hydrocarboné substitué.

En l'espèce, Z représente un radical divalent choisi dans le groupe constitué par les radicaux alkylène (compositions I1 à I4 et I10 à I12), arylène, arylalkylène, alkylarylène, cycloalkylène, alcénylène, AL-AR-AL avec AL représentant des radicaux monovalents alkyl et AR représentant un groupe aryl (composition I5), AR-AL-AR avec AR représentant des radicaux monovalents aryl et AL représentant un groupe alkyl.

Pour les compositions I1 à I4 et I10 à I12, Z représente un radical divalent alkylène linéaire comprenant un nombre d'atomes de carbone allant de 1 à 15, de préférence de 2 à 12 et plus préférentiellement de 2 à 8. Ce nombre d'atomes de carbone est égal à 6 pour les aldéhydes des compositions I1, I2 et I10 à I12. Ce nombre d'atomes de carbone est égal à 2 pour l'aldéhyde de la composition I3. Ce nombre d'atomes de carbone est égal à 12 pour l'aldéhyde de la composition I4.

L'aldéhyde de formule **W** des compositions I1 et I2 présente la formule **SP10** suivante :

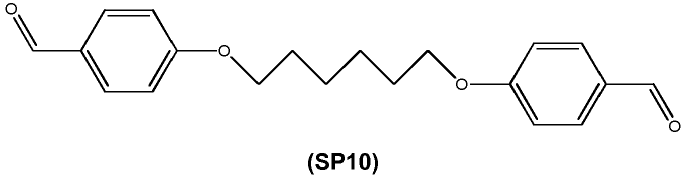

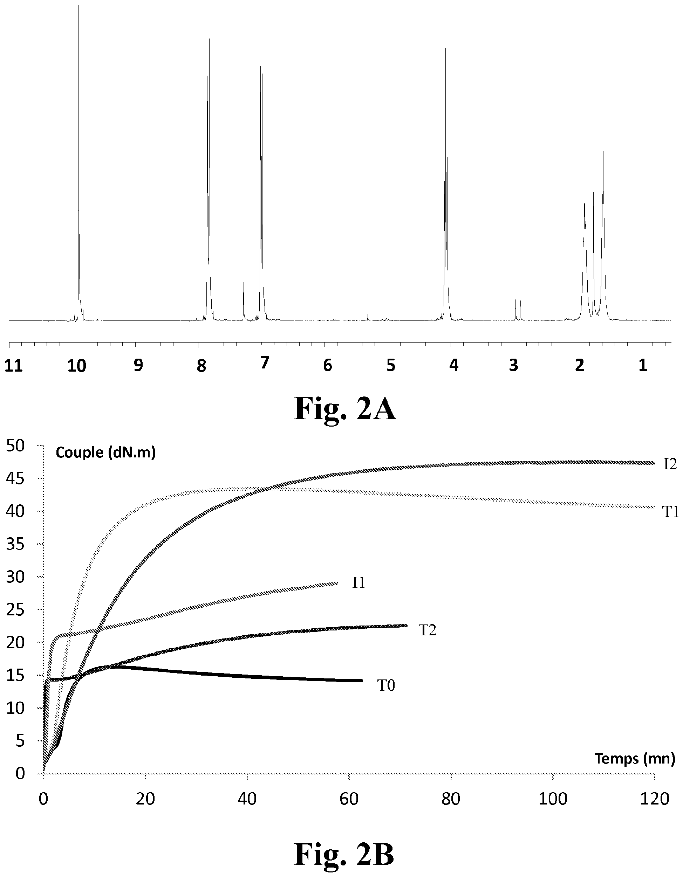

L'aldéhyde **SP10** est préparé à partir du 1,6-dibromohexane (CAS 629-03-8) et du 4-hydroxybenzaldéhyde (CAS 123-08-0) en présence d'une base minérale dans un solvant organique. Ainsi, par exemple, on introduit 30 g de 1,6 dibromohexane, 30 g de 4-hydroxybenzaldéhyde, 68 g de K₂CO₃ dans 300 mL de DMF. On agite le tout à 110°C pendant 24 heures. Puis, on filtre le mélange réactionnel et on réalise 5 extractions aqueuses suivi de 2 extractions en présence de LiBr. Le produit est alors récupéré par filtration des sels et évaporation des solvants. On obtient 33,4 g de l'aldéhyde **SP10.** Le spectre RMN ¹H de l'aldéhyde **SP10** est représenté sur la figure 2A (RMN ¹H (CDCl₃, 300 MHz) : 9.88 (2H, s), 7.82 (4H, d), 7.01 (4H, d), 4.07 (4H, t), 1.87 (4H, m), 1.58 (4H, m)).

L'aldéhyde de formule **W** de la composition I3 présente la formule **SP11** suivante (CAS 34074-28-7) :

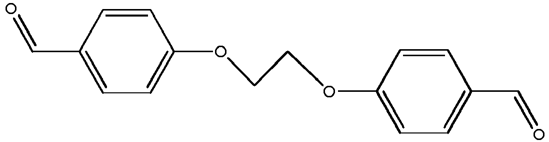

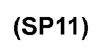

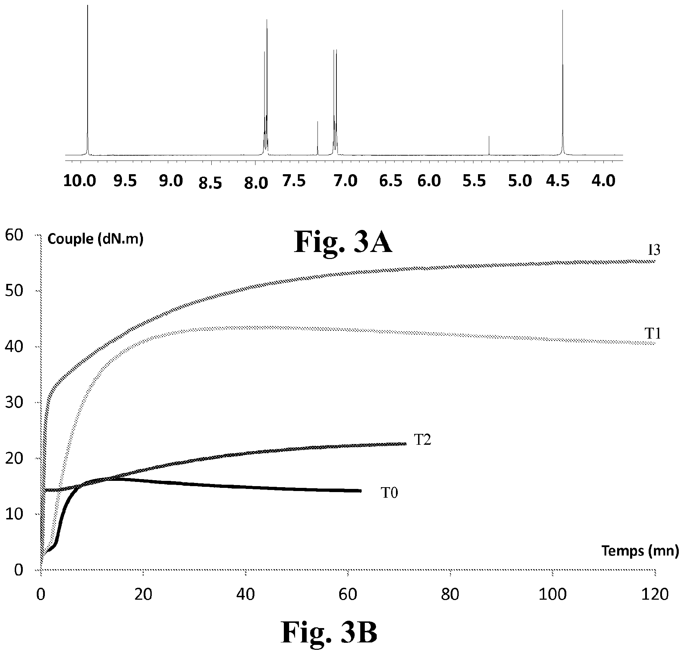

L'aldéhyde **SP11** est préparé d'une façon analogue à l'aldéhyde **SP10** à partir du 1,2-dibromoéthane (CAS 106-93-4) et du 4-hydroxybenzaldéhyde (CAS 123-08-0). Le spectre RMN ¹H de l'aldéhyde **SP11** est représenté sur la figure 3A (RMN ¹H (CDCl₃, 300 MHz) : 9.92 (2H, s), 7.86 (4H, m), 7.09 (4H, m), 4.46 (4H,s)).

L'aldéhyde de formule **W** de la composition I4 présente la formule **SP12** suivante (CAS 69285-82-1) :

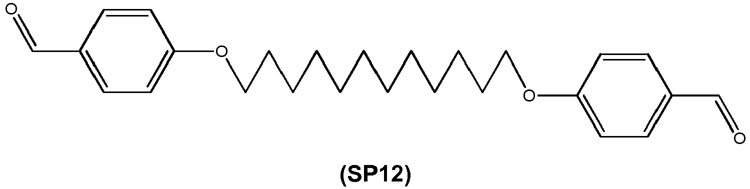

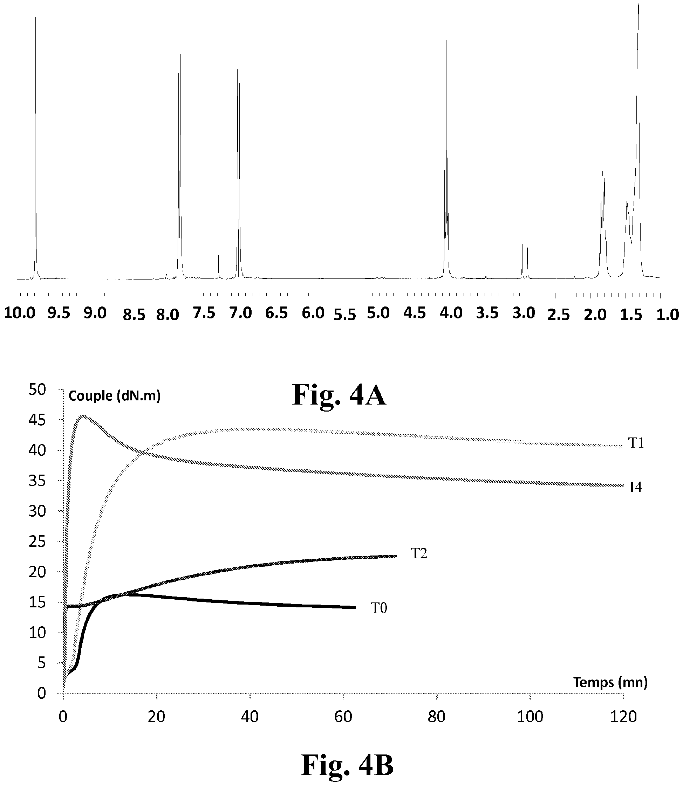

L'aldéhyde **SP12** est préparé d'une façon analogue à l'aldéhyde **SP10** à partir du 1,10-dibromodécane (CAS 4101-68-2) et du 4-hydroxybenzaldéhyde (CAS 123-08-0). Le spectre RMN ¹H de l'aldéhyde **SP12** est représenté sur la figure 4A (RMN ¹H (CDCl₃, 300 MHz) : 9.88 (2H, s), 7.81 (4H, d), 6.98 (4H, d), 4.04 (4H, t), 1.82 (4H, q), 1.31 (16H, m)).

L'aldéhyde de formule **W** de la composition I5 présente la formule **SP13** suivante (CAS 64621-41-6) :

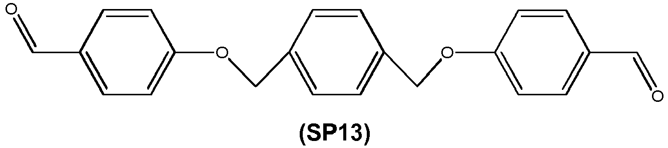

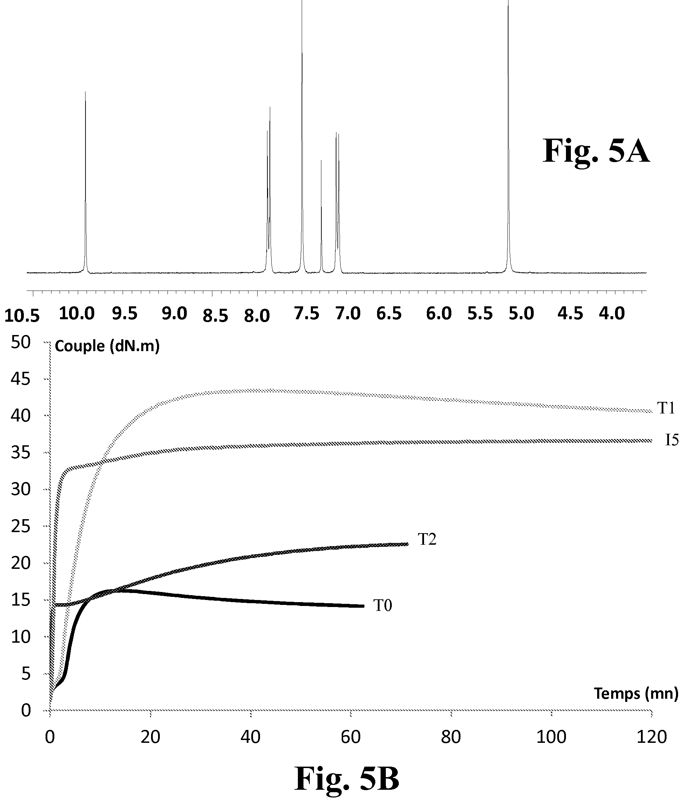

L'aldéhyde **SP13** est préparé d'une façon analogue à l'aldéhyde **SP10** à partir du 1,4-bis(bromométhyl)benzène (CAS 623-24-5) et du 4-hydroxybenzaldéhyde (CAS 123-08-0). Le spectre RMN ¹H de l'aldéhyde **SP13** est représenté sur la figure 5A (RMN ¹H (CDCl3, 300 MHz) : 9.91 (2H, s), 7.88 (4H, d), 7.49 (4H, s), 7.08 (4H, d), 5.19 (4H, s)).

L'aldéhyde de formule **W** de la composition I10 présente la formule **SP14** suivante (CAS 112116-24-2):

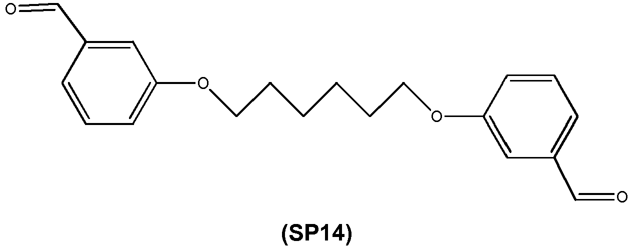

L'aldéhyde de formule **SP14** est tel que le groupe SP et le groupe CHO sont situés en position méta l'un par rapport à l'autre sur chaque noyau aromatique Ar₁ et Ar₂.

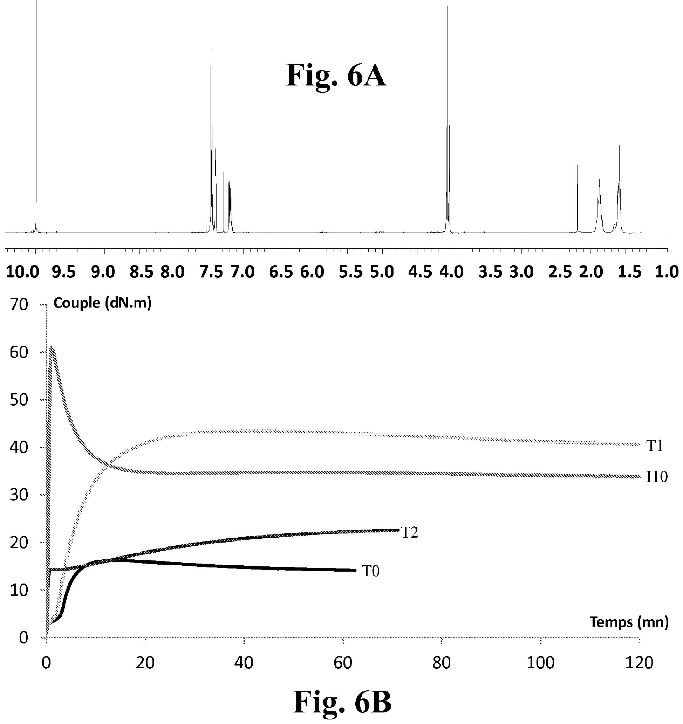

L'aldéhyde **SP14** est préparé d'une façon analogue à l'aldéhyde **SP10** à partir du 1,6-dibromohexane (CAS 629-03-8) et du 3-hydroxybenzaldéhyde (CAS 100-83-4). Le spectre RMN ¹H de l'aldéhyde **SP14** est représenté sur la figure 6A (RMN ¹H (CDCl3, 300 MHz) : 9.98 (2H, s), 7.46 (6H, m), 7.18 (2H, m), 4.05 (4H, t), 1.87 (4H, m), 1.58 (4H, m)).

L'aldéhyde de formule **W** de la composition I11 présente la formule **SP15** suivante (CAS 64621-35-8):

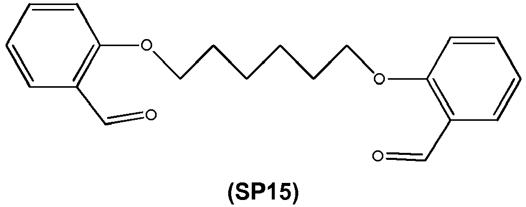

L'aldéhyde de formule **SP15** est tel que le groupe SP et le groupe CHO sont situés en position ortho l'un par rapport à l'autre sur chaque noyau aromatique Ar₁ et Ar₂.

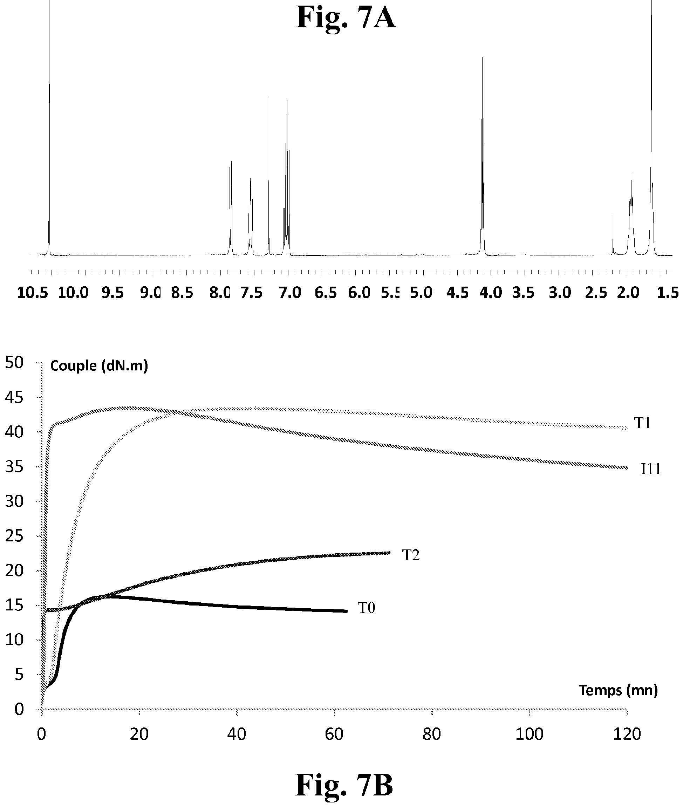

L'aldéhyde **SP15** est préparé d'une façon analogue à l'aldéhyde **SP10** à partir du 1,6-dibromohexane (CAS 629-03-8) et du 2-hydroxybenzaldéhyde (CAS 90-02-8). Le spectre RMN ¹H de l'aldéhyde **SP15** est représenté sur la figure 7A (RMN ¹H (CDCl3, 300 MHz) : 10.53 (2H, s), 7.83 (2H, m), 7.56 (2H,m), 7.01 (4H, m), 4.12 (4H, t), 1.90 (4H, m), 1.62 (4H, m)).

L'aldéhyde de formule **W** de la composition I12 présente la formule **SP16** suivante (CAS 79293-43-9):

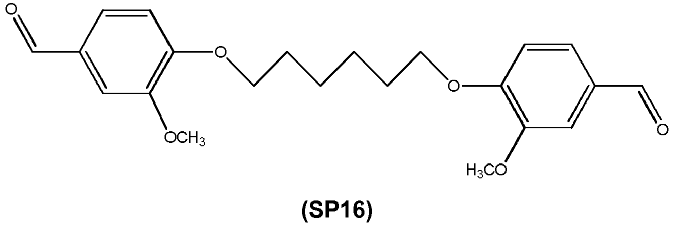

Chaque noyau aromatique Ar₁, Ar₂ est substitué respectivement par au moins un groupe K₁, K₂ représentant, indépendamment l'un de l'autre, un radical monovalent hydrocarboné et un radical monovalent hydrocarboné substitué. En l'espèce, de préférence, chaque groupe K₁, K₂ représentant, indépendamment l'un de l'autre, un radical monovalent alkyle ou un radical monovalent O-alkyle et ici un radical O-Méthyle. En l'espèce, chaque groupe K₁, K₂, ici O-Méthyle et le groupe SP sont situés en position ortho l'un par rapport l'autre sur chaque noyau aromatique benzénique Ar₁, Ar₂.

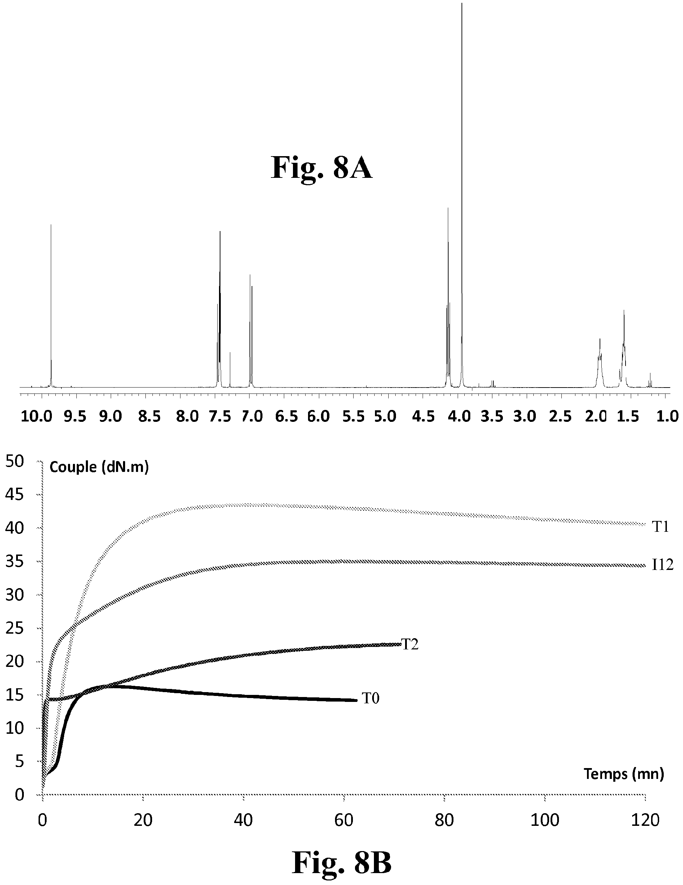

L'aldéhyde **SP16** est préparé d'une façon analogue à l'aldéhyde **SP10** à partir du 1,6-dibromohexane (CAS 629-03-8) et du 4-hydroxy-3-méthoxybenzaldéhyde (CAS 121-33-5). Le spectre RMN ¹H de l'aldéhyde **SP16** est représenté sur la figure 8A (RMN ¹H (CDCl3, 300 MHz) : 9.86 (2H, s), 7.42 (4H, m), 6.96 (2H, d), 4.13 (4H, t), 3.93 (6H, s), 1.94 (4H, m), 1.59 (4H, m)).

### Aldéhydes de formule W des compositions 16 à 19

Chaque aldéhyde de formule **W** de chaque composition I6 à I9 est tel que SP sépare les groupes Ar₁ et Ar₂ par un nombre de liaisons covalentes strictement supérieur à 15 et SP représente un radical choisi dans le groupe constitué par les radicaux polyester, polyéther, polydiène, polyalkylène et polysilicone et les associations de ces radicaux, de préférence dans le groupe constitué par les radicaux polyéther (compositions I6 à I8) et polysilicone (composition I9) et les associations de ces radicaux. Ici, le radical est divalent.

L'aldéhyde de formule **W** des compositions I6 et I7 est de formule **W4.** Z₄ est alors un radical divalent alkylène linéaire, en l'espèce un radical butylène. L'aldéhyde de formule **W** des compositions I6 et I7 présente la formule **SP50** suivante : 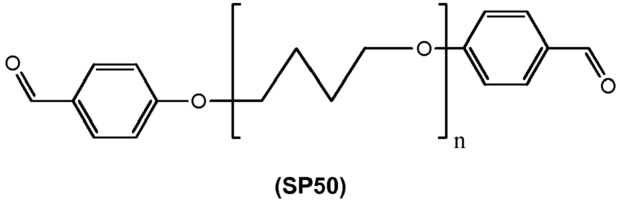 avec n compris entre 3 et 4.

L'aldéhyde **SP50** est préparé à partir du poly(tétrahydrofurane) (poly(THF)) selon la voie de synthèse suivante :

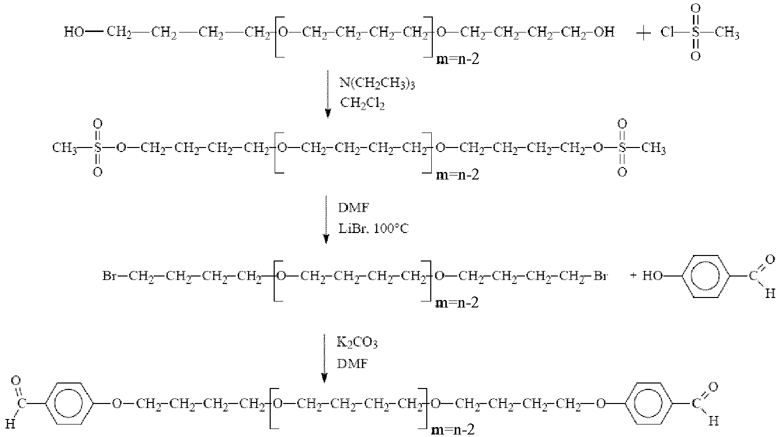

Dans une première étape, on fait réagir un poly(THF) présentant une masse molaire d'environ 250 g.mol⁻¹ (Référence Sigma-Aldrich 345261 - CAS 25190-06-1) et le chlorure de méthanesulfonyle (CAS 124-63-0) en présence d'une base organique, ici la triéthylamine dans un solvant organique, ici le dichlorométhane. Ainsi, par exemple, dans un ballon bicol sont introduits 35 g de poly(THF), 46.75 g (3.3 eq) de triéthylamine (CAS 121-44-8) dans 500 mL de dichlorométhane. On refroidit le milieu réactionnel (0°C) et on ajoute ensuite goutte à goutte 48.09 g (3 eq) de chlorure de mésyle (CAS 124-63-0). Le ballon est équipé d'un réfrigérant, puis le mélange est placé sous agitation magnétique pendant 1 heure. Une fois la synthèse terminée on ajoute 500 mL de dichlorométhane. On effectue une extraction aqueuse acide (HCl 0.5 M) pour éliminer la triéthylamine en excès puis un lavage à l'eau. On sèche sur Na₂SO₄ on filtre et on évapore. On obtient un liquide marron avec un rendement de 95%.

Puis, dans une deuxième étape, on substitue les groupements mésylates par des groupes halogènures, ici des bromures en faisant réagir le poly(THF) substitué avec du bromure de lithium (CAS 7550-35-8) dans un solvant organique. Ainsi, par exemple, dans un ballon monocol sont introduits 54.5 g de polyTHF dimésylé, 36.7 g (4 eq) de LiBr (CAS 7550-35-8), et 500 mL de N,N-diméthylformamide. Le ballon est équipé d'un réfrigérant, puis le mélange est placé sous agitation magnétique à 100°C pendant 4 heures. Après refroidissement à température ambiante, 1000 mL d'acétate d'éthyle sont ajoutés au mélange. Cinq extractions aqueuses sont alors effectuées afin d'éliminer le LiBr. La phase organique est ensuite séchée sur sulfate de sodium anhydre, puis l'acétate d'éthyle est éliminé par évaporation sous vide. Le produit final est un liquide marron obtenu avec un rendement de 86%.

Enfin, lors d'une troisième étape, on fait réagir le produit intermédiaire dibromé et le 4-hydroxybenzaldéhyde (CAS 123-08-0) en présence d'une base minérale dans un solvant organique. Ainsi, par exemple, dans un ballon monocol sont introduits 42 g de poly(THF) dibromé, 28.04 g (2.05 eq) de 4-hydroxybenzaldehyde, 63.46 g (4 eq) de carbonate de potassium et 500 mL de N,N-diméthylformamide. Le ballon est équipé d'un réfrigérant, puis le mélange est placé sous agitation magnétique à 110°C pendant 4 heures. Après refroidissement à température ambiante, 1000 mL d'acétate d'éthyle sont ajoutés au mélange. Cinq extractions aqueuses sont alors effectuées afin d'éliminer le 4-hydroxybenzaldéhyde et le carbonate de potassium en excès, ainsi que le N,N-diméthylformamide. La phase organique est ensuite séchée sur sulfate de sodium anhydre, puis l'acétate d'éthyle est éliminé par évaporation sous vide. On obtient l'aldéhyde **SP50** sous la forme d'un liquide jaune avec un rendement de 86%.

L'indice de benzaldéhyde est titré de façon connue par l'homme du métier par RMN ¹H (CDCl₃) en comparant le singulet à 6.85 ppm correspondant aux 2H de la double liaison C=C du diéthyl fumarate et le triplet dédoublé à 7.82 ppm correspondant aux 2 protons aromatiques de chaque benzaldéhyde d'une masse connue d'aldéhyde **SP50** à titrer. L'indice de benzaldéhyde de l'aldéhyde **SP50** est égal à 3,77.

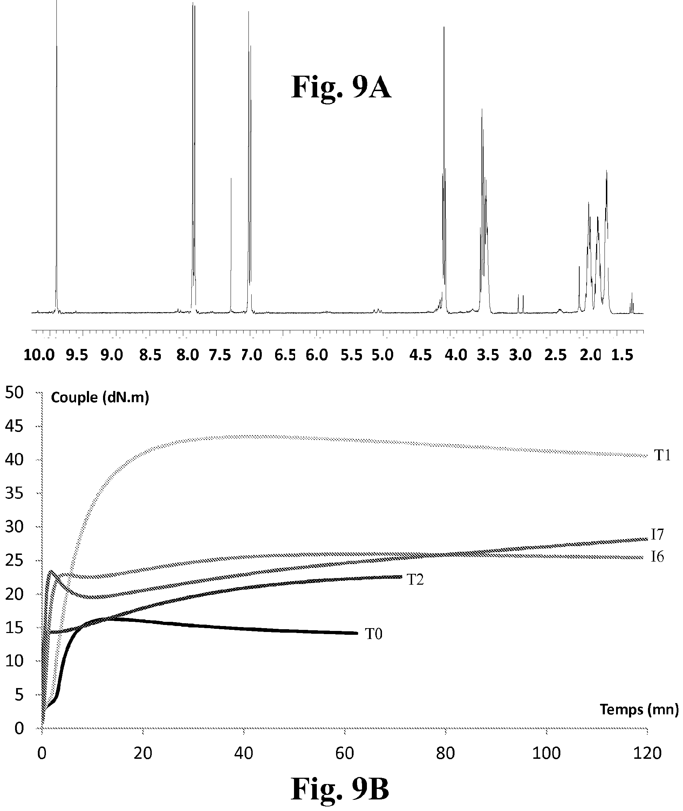

Le spectre RMN ¹H de l'aldéhyde **SP50** est représenté sur la figure 9A (RMN ¹H (CDCl3, 300 MHz) : 9.89 (2H, s), 7.85 (4H, d), 6.98 (4H, d), 4.08 (4H, t), 3.49 (4H + 4Hₙ, m), 1.65 (8H + 4Hₙ, m)).

L'aldéhyde de formule **W** de la composition I8 est également de formule **W4** et présente la formule **SP51** suivante : 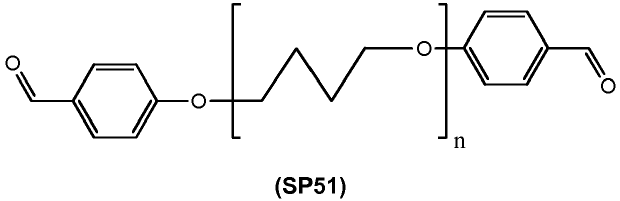 avec n compris entre 13 et 14.

L'aldéhyde **SP51** est préparé d'une façon analogue à l'aldéhyde **SP50** à partir d'un poly(THF) présentant une masse molaire d'environ 1000 g.mol⁻¹ (Référence Sigma-Aldrich 345296 - CAS 25190-06-1).

L'indice de benzaldéhyde de l'aldéhyde **SP51** est titré d'une façon analogue à celui de l'aldéhyde **SP50.** L'indice de benzaldéhyde de l'aldéhyde **SP51** est égal à 1,36.

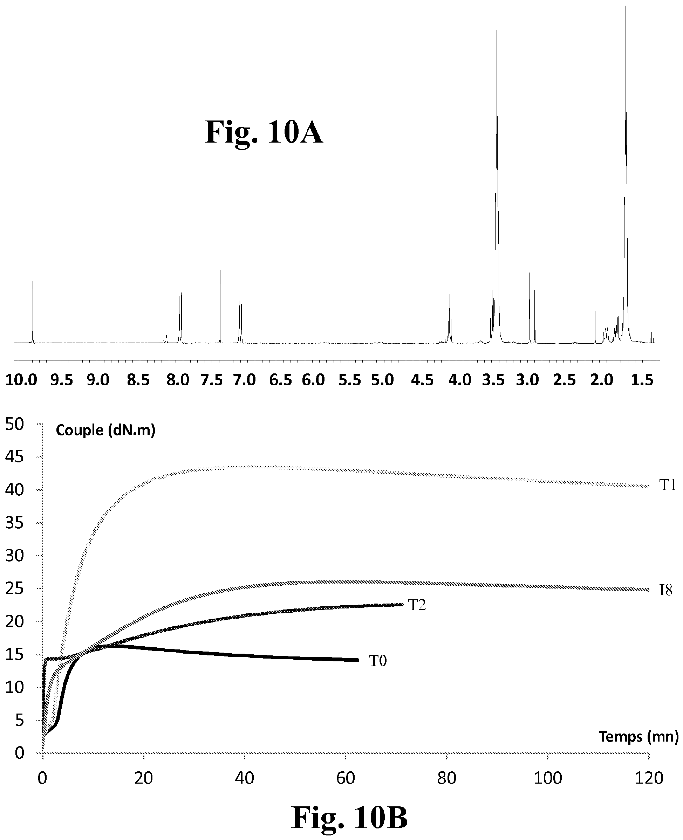

Le spectre RMN ¹H de l'aldéhyde **SP51** est représenté sur la figure 10A (RMN ¹H (CDCl3, 300 MHz) : 9.89 (2H, s), 7.82 (4H, d), 6.98 (4H, d), 4.08 (4H, t), 3.42 (4H + 4Hₙ, m), 1.62 (8H + 8Hₙ, m)).

L'aldéhyde de formule **W** de la composition I9 est de formule **W5** dans laquelle Y₁=Y₂=O, chaque radical ZE₁, ZE₂ représente un radical divalent alkylène linéaire, en l'espèce propylène, chaque radical ZE₃, ZE₄ représente un radical monovalent alkyl, en l'espèce méthyl. L'aldéhyde de formule **W** de la composition I9 présente la formule **SP52** suivante : 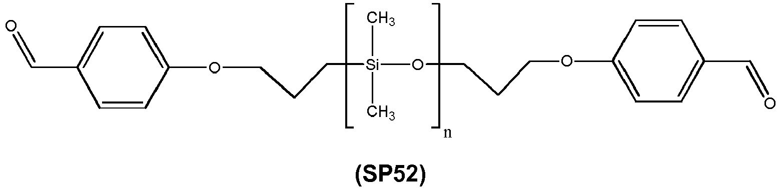 avec n compris entre 5 et 9.

L'aldéhyde **SP52** est préparé d'une façon analogue à l'aldéhyde **SP50** à partir d'un polydiméthylsiloxane diol (PDMS diol) présentant une masse molaire comprise entre 600 et 850 g.mol⁻¹ (Référence ABCR GmbH AB146673 - CAS 104780-66-7).

L'indice de benzaldéhyde de l'aldéhyde **SP52** est titré d'une façon analogue à celui de l'aldéhyde **SP50.** L'indice de benzaldéhyde de l'aldéhyde **SP52** est égal à 2,16.

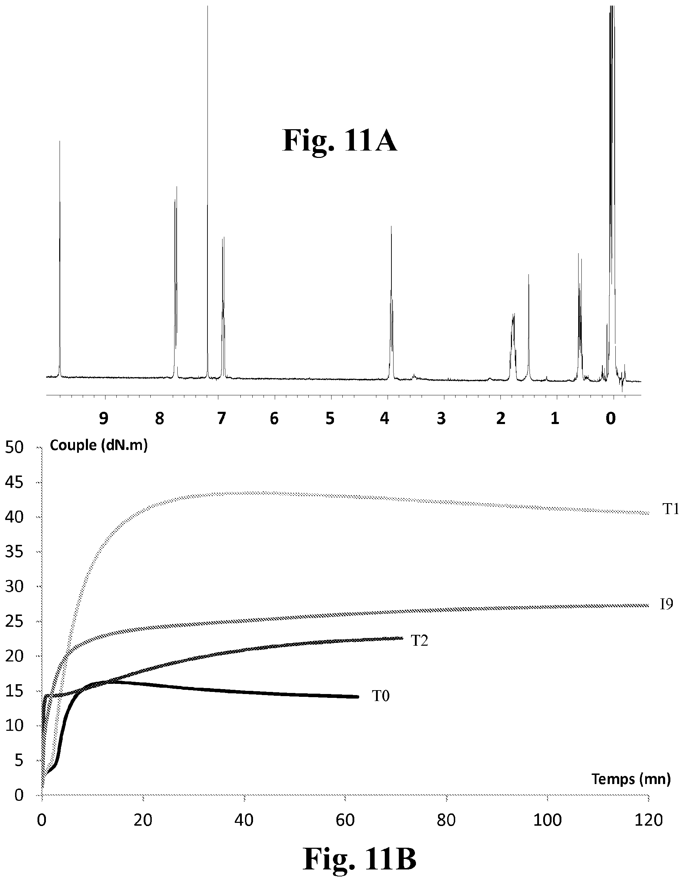

Le spectre RMN ¹H de l'aldéhyde **SP52** est représenté sur la figure 11A (RMN ¹H (CDCl3, 300 MHz) : 9.80 (2H, s), 7.73 (4H, m), 6.89 (4H, m), 3.93 (4H, m), 1.78 (4H, m), 0.56 (4H, m), 0.01 (6H + 6Hₙ, m)).

### Aldéhyde de formule W de la composition I13

L'aldéhyde de formule **W** de la composition I13 est de formule **W2** : 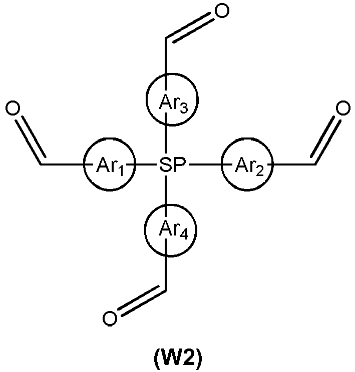 dans laquelle :
- chaque groupe Ar₃ et Ar₄ représente, indépendamment l'un de l'autre, un noyau aromatique, éventuellement substitué ;
- SP relie les groupes Ar₁, Ar₂, Ar₃ et Ar₄ entre eux, SP séparant deux à deux les groupes Ar₁, Ar₂, Ar₃ et Ar₄ par au moins 2 liaisons covalentes.

Plus précisément, l'aldéhyde de formule **W** de la composition I13 présente la formule SP30 suivante :

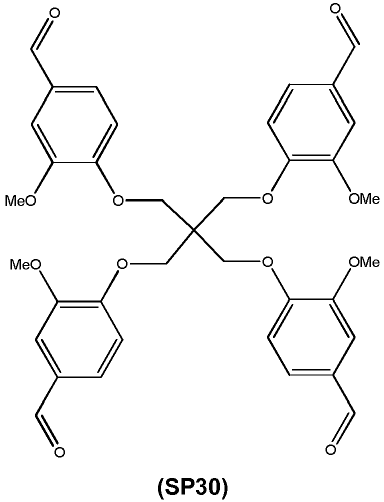

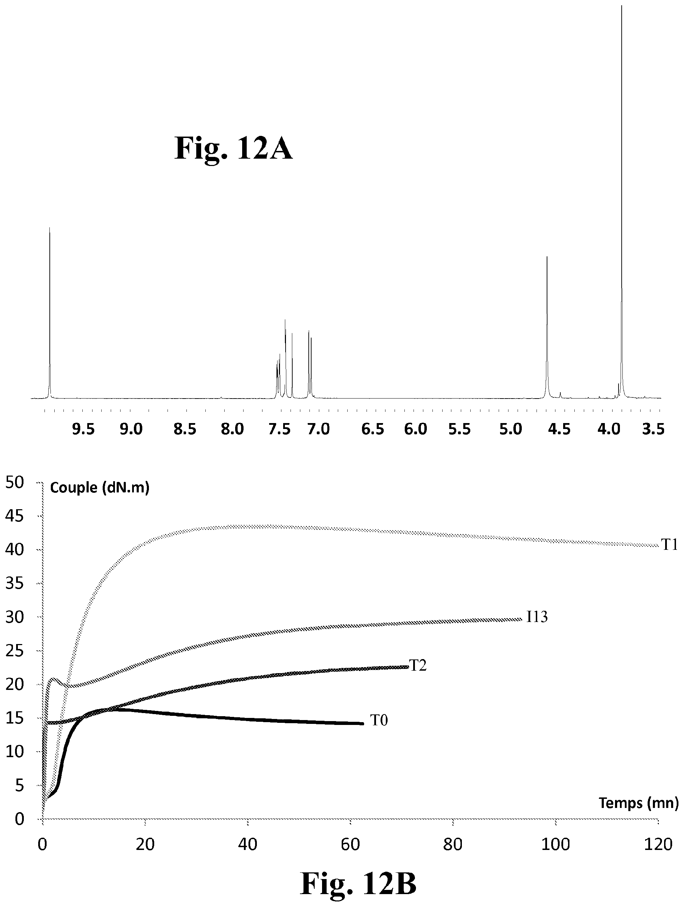

L'aldéhyde **SP30** est préparé d'une façon analogue à l'aldéhyde **SP10** à partir du tétrabromure de pentaérythritol (CAS 3229-00-3) et du 4-hydroxy-3-méthoxybenzaldéhyde (CAS 121-33-5). Le spectre RMN ¹H de l'aldéhyde **SP30** est représenté sur la figure 12A (RMN ¹H (CDCl₃, 300 MHz) : 9.84 (4H, s), 7.08-7.44 (12H, m), 4.58 (8H, s), 3.79 (12H, s)).

### Essais comparatifs

Dans une première étape, on a incorporé à un élastomère la charge renforçante, en malaxant thermomécaniquement le tout, jusqu'à atteindre une température maximale comprise entre 110°C et 190°C. Puis on a refroidit l'ensemble à une température inférieure à 110°C. Ensuite, on a incorporé, au cours d'une seconde étape, le système de réticulation, le phénol/polyphénol aromatique, et le donneur de méthylène/aldéhyde de formule W et éventuellement l'aldéhyde additionnel. A l'issue de cette seconde étape, on a caractérisé la fluidité. On a également chauffé le mélange à 150°C jusqu'à l'obtention du couple rhéométrique maximum (couple mesuré à 120 minutes) afin de vulcaniser la composition et réticuler la résine phénol-aldéhyde. Puis, on a réalisé une caractérisation de la rigidité à 23°C de la composition lors d'un essai en traction.

### Caractérisation de la rigidité à haute température - Couple rhéométrique maximum

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la vulcanisation et de la réticulation de la résine phénol-aldéhyde. On a représenté sur les figures 2B à 12B les courbes représentant l'évolution du couple rhéométrique des compositions I1 à I13 ainsi que celles représentant l'évolution du couple rhéométrique des compositions T0, T1 et T2.

Plus le couple rhéométrique maximum Cmax est élevé, plus la composition présente une rigidité pouvant être maintenue à haute température.

### Caractérisation de la rigidité à 23°C - Essai de traction

Ces essais permettent de déterminer les contraintes d'élasticité et les propriétés à la rupture. Sauf indication différente, ils sont effectués conformément à la norme ASTM D 412 de 1998 (éprouvette C). On mesure en seconde élongation (i.e. après un cycle d'accommodation) les modules sécants dits "nominaux" (ou contraintes apparentes, en MPa) à 10% d'allongement (noté "MA10"). Toutes ces mesures de traction sont effectuées dans les conditions normales de température et d'hygrométrie, selon la norme ASTM D 1349 de 1999 et reportées dans le tableau 1.

### Caractérisation de la fluidité - Plasticité Mooney

La plasticité Mooney est réalisée en utilisant un consistomètre selon la norme ASTM D 1646-99. La mesure de plasticité Mooney se fait selon le principe suivant : le mélange cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre). Cette mesure est réalisée moins de 24h après la fabrication de la composition de caoutchouc. Plus la plasticité Mooney est faible, plus la composition est fluide.

Tout d'abord, les résultats du tableau 1 montrent que l'utilisation d'un polyphénol aromatique et de l'aldéhyde (4) dans la composition témoin T2 permet d'obtenir une rigidité à 23°C bien plus élevée que celle d'une composition dépourvue de résine renforçante (T0) mais également que celle d'une composition comprenant une résine renforçante de l'état de la technique (T1). Toutefois, la composition T2 présente une fluidité relativement faible de sorte que la mise en forme de la composition de caoutchouc dans des conditions industrielles classiques est gênée.

Contrairement à la composition T1, chaque composition selon l'invention I1 à I13 présente une rigidité à 23°C équivalente voire supérieure à celle de la composition T1. De plus, à l'inverse de T1, chaque composition I1 à I13 ne produit pas de formaldéhyde au cours de sa vulcanisation.

Chaque composition selon l'invention I1 à I13 présente une fluidité relativement élevée et significativement supérieure à celle de la composition T2. Chaque composition selon l'invention I1 à I13 présente également une rigidité significativement supérieure à celle des compositions T0, T1 et T2 à l'exception de l'exemple I13 qui présente toutefois une rigidité significativement supérieure à celle des compositions T0 et T1 et suffisante pour permettre un renforcement de la composition de caoutchouc.

Chaque composition selon l'invention I1 à I13 présente une tenue de la rigidité à des températures élevées (Cmax) améliorée par rapport à la tenue de la composition T0. De plus, les compositions selon l'invention I1 à I13 présentent une tenue de la rigidité à des températures élevées (Cmax) au moins égale (I6 et I8) voire supérieure (I7 et I9) ou largement supérieure (I1 à I5 et I10 à I13) à celle de la composition T2.

L'invention ne se limite pas aux modes de réalisation décrits précédemment.

Dans d'autres modes de réalisation non présents dans le tableau 1, on pourra envisager des polyphénols aromatiques comprenant plusieurs noyaux aromatiques, par exemple benzéniques, au moins deux d'entre eux étant chacun porteur d'au moins deux groupes -O-H en position méta l'un par rapport à l'autre. Les deux positions ortho d'au moins un des groupes -O-H de chaque noyau aromatique sont non substituées.

**Tableau 1**

| **Composition** | **Phénol** | **Donneur de méthylène** | **Aldéhyde additionnel** | **Quantités (pce)** | **Mooney** | **(MPa)** | **Cmax** | / |
|---|---|---|---|---|---|---|---|---|
| T0 | / | / | / | 0/0/0 | <50 | 7,4 | 16 | / |
| T1 | (1) | (2) | / | 1,6/4/0 | <60 | 16,5 | 44 | / |

| **Composition** | **Polyphénol aromatique** | **Aldéhyde** | **Aldéhyde additionnel** | **Ratio molaire** | **Mooney** | **MA10 (MPa)** | **Cmax** | / |
|---|---|---|---|---|---|---|---|---|
| T2 | (3) | (4) | / | 1/0,3/0 | 100 | 24,8 | 26 | / |

| **Composition** | **Polyphénol aromatique** | **Aldéhyde de formule W** | **Aldéhyde additionnel** | **Ratio molaire** | **Mooney** | **MA10 (MPa)** | **Cmax** | **Figures** |
|---|---|---|---|---|---|---|---|---|
| I1 | (3) | SP10 | / | 1/0,3/0 | <75 | 30 | 36 | 2A, 2B |
| I2 | (5) | SP10 | / | 1/0,3/0 | <75 | 28,2 | 48 | 2A, 2B |
| I3 | (3) | SP11 | / | 1/0,3/0 | <90 | 40 | 55 | 3A, 3B |
| I4 | (3) | SP12 | / | 1/0,3/0 | <60 | 50,3 | 35 | 4A, 4B |
| I5 | (3) | SP13 | / | 1/0,3/0 | <75 | 35 | 37 | 5A, 5B |
| I6 | (3) | SP50 | / | 1/0,3/0 | <60 | 52,4 | 26 | 9A, 9B |
| I7 | (3) | SP50 | (4) | 1/0,1/0,2 | <80 | 44,7 | 28 | 9A, 9B |
| I8 | (3) | SP51 | (4) | 1/0,1/0,2 | <60 | 43 | 26 | 10A, 10B |
| I9 | (3) | SP52 | (4) | 1/0,1/0,2 | <80 | 35,8 | 27 | 11A, 11B |
| I10 | (3) | SP14 | / | 1/0,3/0 | <75 | 44,6 | 34 | 6A, 6B |
| I11 | (3) | SP15 | / | 1/0,3/0 | <75 | 37,1 | 35 | 7A, 7B |
| I12 | (3) | SP16 | / | 1/0,3/0 | <75 | 30,2 | 35 | 8A, 8B |
| I13 | (3) | SP30 | / | 1/0,2/0 | <90 | 17,1 | 30 | 12A, 12B |

| | | | | | | | | |
|---|---|---|---|---|---|---|---|---|
| (1) Résine précondensée SRF 1524 (de la société Schenectady ; diluée à 75%) ; (2) Hexa-méthylènetétramine (de la société Sigma-Aldrich ; de pureté ≥ 99%) ; (3) Phloroglucinol (de la société Alfa Aesar ; de pureté 99%) ; (4) 1,4-benzènedicarboxaldéhyde (de la société ABCR ; de pureté 98%) ; (5) Résorcinol (de la société Sumitomo ; de pureté 99.5%). | | | | | | | | |

## Revendications

1. Composition de caoutchouc, **caractérisé en ce qu'**elle comprend au moins une résine phénol-aldéhyde à base:
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W** : 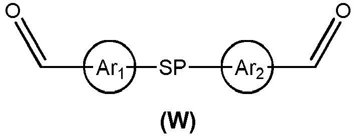 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes.

2. Composition selon la revendication précédente, dans laquelle SP représente un radical au moins divalent choisi dans le groupe constitué par un radical hydrocarboné et un radical hydrocarboné substitué.

3. Composition selon l'une quelconque des revendications précédentes, dans laquelle SP sépare les groupes Ar₁ et Ar₂ par un nombre de liaisons covalentes supérieur ou égal à 3, de préférence supérieur ou égal à 4 et plus préférentiellement supérieur ou égal à 5 et par un nombre de liaisons covalentes inférieur ou égal à 20, de préférence inférieur ou égal à 15.

4. Composition selon l'une quelconque des revendications précédentes, dans laquelle la masse molaire de l'aldéhyde est inférieure ou égale à 10000 g.mol⁻¹, de préférence inférieure ou égale à 5000 g.mol⁻¹, et plus préférentiellement inférieure ou égale à 2000 g.mol⁻¹ et encore plus préférentiellement à 500 g.mol⁻¹.

5. Composition selon l'une quelconque des revendications précédentes, dans laquelle l'aldéhyde est de formule **W3** : 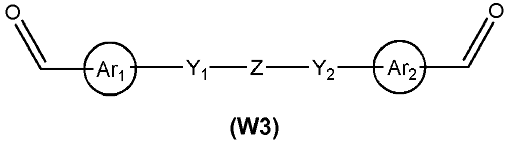 dans laquelle Y₁-Z-Y₂ représente un radical divalent dans lequel :
- Y₁ et Y₂ représentent chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe C=O, un groupe S=O et un groupe SO₂ et plus préférentiellement Y₁ et Y₂ représentant chacun l'oxygène ; et
- Z représente un radical divalent choisi dans le groupe constitué par un radical hydrocarboné et un radical hydrocarboné substitué.

6. Composition selon la revendication précédente, dans laquelle Z représente - un radical divalent choisi dans le groupe constitué par les radicaux alkylène, arylène, arylalkylène, alkylaryl**è**ne, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl,
- de préférence dans le groupe constitué par les radicaux alkylène, AL-AR-AL avec AL représentant des radicaux monovalents alkyl et AR représentant un groupe aryl, AR-AL-AR avec AR représentant des radicaux monovalents aryl et AL représentant un groupe alkyl
- et plus préférentiellement Z représente un radical divalent alkylène.

7. Composition selon la revendication 5 ou 6, dans laquelle Z représente un radical divalent alkylène linéaire comprenant un nombre d'atomes de carbone allant de 1 à 15, de préférence de 2 à 12 et plus préférentiellement de 2 à 8.

8. Composition selon l'une quelconque des revendications 1 à 4, dans laquelle SP représente un radical choisi dans le groupe constitué par les radicaux polyester, polyéther, polydiène, polyalkylène et polysilicone et les associations de ces radicaux, de préférence dans le groupe constitué par les radicaux polyéther et polysilicone et les associations de ces radicaux.

9. Composition selon l'une quelconque des revendications précédentes, dans laquelle le polyphénol aromatique est choisi dans le groupe constitué par le résorcinol, le phloroglucinol, le 2,2',4,4'-tétrahydroxydiphényl sulfide, la 2,2',4,4'-tétrahydroxybenzophénoneet les mélanges de ces composés, de préférence le polyphénol aromatique est le phloroglucinol.

10. Composition selon l'une quelconque des revendications précédentes, à l'état cuit.

11. Composition de caoutchouc, **caractérisée en ce qu'**elle comprend :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W** : 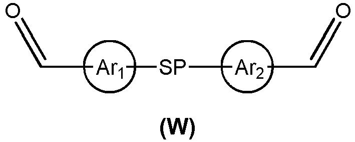 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes.

12. Procédé de fabrication d'une composition de caoutchouc à l'état cru, **caractérisé en ce qu'**il comprend une étape de mélangeage :
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W** : 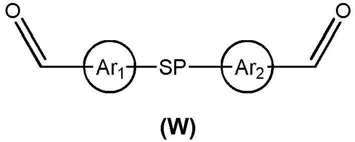 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes.

13. Procédé de fabrication d'une composition de caoutchouc à l'état cuit, **caractérisé en ce qu'**il comprend :
- une étape de fabrication d'une composition de caoutchouc à l'état cru comprenant une étape de mélangeage :
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W** : 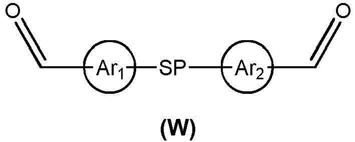 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
- puis, une étape de mise en forme de la composition de caoutchouc à l'état cru,
- puis, une étape de vulcanisation de la composition de caoutchouc durant laquelle on réticule une résine phénol-aldéhyde à base du polyphénol aromatique et de l'aldéhyde.

14. Utilisation d'un aldéhyde de formule **W** : 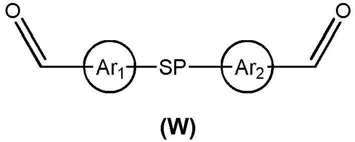 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
- dans une composition de caoutchouc comprenant une résine phénol-aldéhyde à base d'au moins un polyphénol aromatique et d'au moins l'aldéhyde pour augmenter la rigidité de la composition de caoutchouc et/ou ;
- pour augmenter la fluidité à l'état cru d'une composition de caoutchouc comprenant une résine phénol-aldéhyde à base d'au moins un polyphénol aromatique et d'au moins l'aldéhyde et/ou ;
- pour maintenir la rigidité avec l'augmentation de la température d'une composition de caoutchouc comprenant une résine phénol-aldéhyde à base d'au moins un polyphénol aromatique et d'au moins l'aldéhyde.

15. Pneumatique (1), **caractérisé en ce qu'**il comprend une composition de caoutchouc selon l'une quelconque des revendications 1 à 10.

## Patentansprüche

1. Kautschukzusammensetzung, **dadurch gekennzeichnet, dass** sie mindestens ein Phenol-Aldehyd-Harz auf Basis von:
- mindestens einem aromatischen Polyphenol mit mindestens einem aromatischen Kern, der mindestens zwei -O-H-Gruppen in meta-Stellung zueinander trägt, wobei die beiden ortho-Positionen zu mindestens einer der -O-H-Gruppen unsubstituiert sind, und
- mindestens einem Aldehyd der Formel **W:** 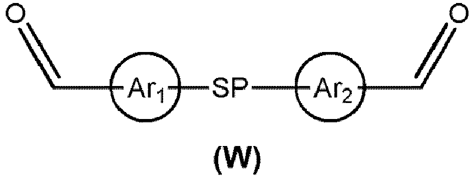 in der:
- jede Gruppe Ar₁ und Ar₂ unabhängig voneinander für einen gegebenenfalls substituierten aromatischen Kern steht und
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
umfasst.

2. Zusammensetzung nach dem vorhergehenden Anspruch, wobei SP für einen mindestens zweiwertigen Rest steht, der aus der Gruppe bestehend aus einem Kohlenwasserstoffrest und einem substituierten Kohlenwasserstoffrest ausgewählt ist.

3. Zusammensetzung nach einem der vorhergehenden Ansprüche, wobei SP die Gruppen Ar₁ und Ar₂ durch eine Zahl von kovalenten Bindungen größer oder gleich 3, vorzugsweise größer oder gleich 4 und weiter bevorzugt größer oder gleich 5 und eine Zahl von kovalenten Bindungen kleiner oder gleich 20 und vorzugsweise kleiner oder gleich 15 trennt.

4. Zusammensetzung nach einem der vorhergehenden Ansprüche, wobei die Molmasse des Aldehyds kleiner oder gleich 10.000 g.mol⁻¹, vorzugsweise kleiner oder gleich 5000 g.mol⁻¹, weiter bevorzugt kleiner oder gleich 2000 g.mol⁻¹ und noch weiter bevorzugt kleiner oder gleich 500 g.mol⁻¹ ist.

5. Zusammensetzung nach einem der vorhergehenden Ansprüche, wobei der Aldehyd die Formel **W3** aufweist: 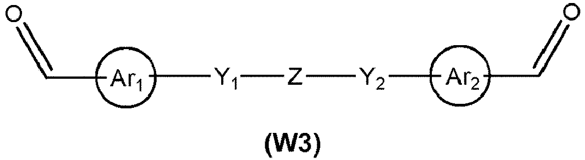 in der Y₁-Z-Y₂ für einen zweiwertigen Rest steht, in dem:
- Y₁ und Y₂ jeweils unabhängig voneinander für eine Gruppe stehen, die aus der Gruppe bestehend aus Sauerstoff, einer CH₂-Gruppe, einer C=O-Gruppe, einer S=O-Gruppe und einer SO₂-Gruppe, vorzugsweise aus der Gruppe bestehend aus Sauerstoff, einer C=O-Gruppe, einer S=O-Gruppe und einer SO₂-Gruppe, ausgewählt ist und weiter bevorzugt Y₁ und Y₂ jeweils für Sauerstoff stehen und
- Z für einen zweiwertigen Rest steht, der aus der Gruppe bestehend aus einem Kohlenwasserstoffrest und einem substituierten Kohlenwasserstoffrest ausgewählt ist.

6. Zusammensetzung nach dem vorhergehenden Anspruch, wobei Z für einen zweiwertigen Rest steht, der aus der Gruppe bestehend aus den folgenden Resten ausgewählt ist: Alkylen, Arylen, Arylalkylen, Alkylarylen, Cycloalkylen, Alkenylen, AL-AR-AL, wobei AL für einwertige Alkylreste steht und AR für eine Arylgruppe steht,
- und AR-AL-AR, wobei AR für einwertige Arylreste steht und AL für eine Alkylgruppe steht, vorzugsweise aus der Gruppe bestehend aus den folgenden Resten: Alkylen, AL-AR-AL, wobei AL für einwertige Alkylreste steht und AR für eine Arylgruppe steht,
- und AR-AL-AR, wobei AR für einwertige Arylreste steht und AL für eine Alkylgruppe steht, und Z weiter bevorzugt für einen zweiwertigen Alkylenrest steht.

7. Zusammensetzung nach Anspruch 5 oder 6, wobei Z für einen linearen zweiwertigen Alkylenrest mit einer Zahl von Kohlenstoffatomen im Bereich von 1 bis 15, vorzugsweise von 2 bis 12 und weiter bevorzugt von 2 bis 8 steht.

8. Zusammensetzung nach einem der Ansprüche 1 bis 4, wobei SP für einen Rest steht, der aus der Gruppe bestehend aus Polyester-, Polyether-, Polydien-, Polyalkylen- und Polysilikonresten und Kombinationen dieser Reste und vorzugsweise aus der Gruppe bestehend aus Polyether- und Polysilikonresten und Kombinationen dieser Reste ausgewählt ist.

9. Zusammensetzung nach einem der vorhergehenden Ansprüche, wobei das aromatische Phenol aus der Gruppe bestehend aus Resorcinol, Phloroglucinol, 2,2',4,4'-Tetrahydroxydiphenylsulfid, 2,2',4,4'-Tetrahydroxybenzophenon und Mischungen dieser Verbindungen ausgewählt ist und es sich bei dem aromatischen Polyphenol vorzugsweise um Phloroglucinol handelt.

10. Zusammensetzung nach einem der vorhergehenden Ansprüche in gehärtetem Zustand.

11. Kautschukzusammensetzung, **dadurch gekennzeichnet, dass** sie
- mindestens ein aromatisches Polyphenol mit mindestens einem aromatischen Kern, der mindestens zwei -O-H-Gruppen in meta-Stellung zueinander trägt, wobei die beiden ortho-Positionen zu mindestens einer der -O-H-Gruppen unsubstituiert sind, und
- mindestens einem Aldehyd der Formel **W:** 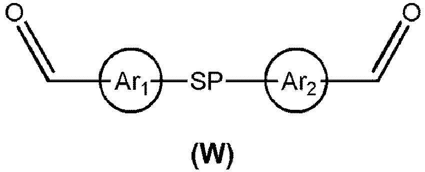 in der:
- jede Gruppe Ar₁ und Ar₂ unabhängig voneinander für einen gegebenenfalls substituierten aromatischen Kern steht und
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
umfasst.

12. Verfahren zur Herstellung einer Kautschukzusammensetzung in rohem Zustand, **dadurch gekennzeichnet, dass** es einen Schritt des Mischens von
- mindestens einem aromatischen Polyphenol mit mindestens einem aromatischen Kern, der mindestens zwei -O-H-Gruppen in meta-Stellung zueinander trägt, wobei die beiden ortho-Positionen zu mindestens einer der -O-H-Gruppen unsubstituiert sind, und
- mindestens einem Aldehyd der Formel **W:** 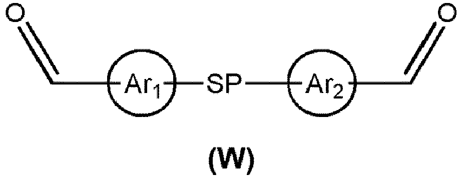 in der:
- jede Gruppe Ar₁ und Ar₂ unabhängig voneinander für einen gegebenenfalls substituierten aromatischen Kern steht und
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
umfasst.

13. Verfahren zur Herstellung einer Kautschukzusammensetzung in gehärtetem Zustand, **dadurch gekennzeichnet, dass** es Folgendes umfasst:
- einen Schritt der Herstellung einer Kautschukzusammensetzung in rohem Zustand, der einen Schritt des Mischens von
- mindestens einem aromatischen Polyphenol mit mindestens einem aromatischen Kern, der mindestens zwei -O-H-Gruppen in meta-Stellung zueinander trägt, wobei die beiden ortho-Positionen zu mindestens einer der -O-H-Gruppen unsubstituiert sind, und
- mindestens einem Aldehyd der Formel **W:** 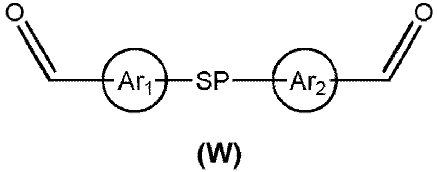 in der:
- jede Gruppe Ar₁ und Ar₂ unabhängig voneinander für einen gegebenenfalls substituierten aromatischen Kern steht und
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt, umfasst,
- dann einen Schritt des Formens der Kautschukzusammensetzung in rohem Zustand,
- dann einen Schritt des Vulkanisierens der Kautschukzusammensetzung, bei dem ein Phenol-Aldehyd-Harz auf Basis des aromatischen Polyphenols und des Aldehyds vernetzt wird.

14. Verwendung eines Aldehyds der Formel **W:** 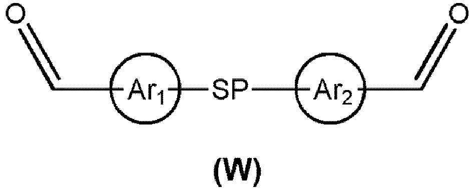 in der:
- jede Gruppe Ar₁ und Ar₂ unabhängig voneinander für einen gegebenenfalls substituierten aromatischen Kern steht und
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
- in einer Kautschukzusammensetzung, die ein Phenol-Aldehyd-Harz auf Basis mindestens eines aromatischen Polyphenols und mindestens eines Aldehyds umfasst, zur Erhöhung der Steifigkeit der Kautschukzusammensetzung und/oder
- zur Erhöhung der Fließfähigkeit einer Kautschukzusammensetzung, die ein Phenol-Aldehyd-Harz auf Basis mindestens eines aromatischen Polyphenols und mindestens eines Aldehyds umfasst, in rohem Zustand und/oder
- zur Aufrechterhaltung der Steifigkeit bei Erhöhung der Temperatur einer Kautschukzusammensetzung, die ein Phenol-Aldehyd-Harz auf Basis mindestens eines aromatischen Polyphenols und mindestens eines Aldehyds umfasst.

15. Reifen (1), **dadurch gekennzeichnet, dass** er eine Kautschukzusammensetzung nach einem der Ansprüche 1 bis 10 umfasst.

## Claims

1. Rubber composition, **characterized in that** it comprises at least one phenol-aldehyde resin based:
- on at least one aromatic polyphenol comprising at least one aromatic ring bearing at least two -O-H groups in the meta position relative to one another, the two positions ortho to at least one of the -O-H groups being unsubstituted; and
- on at least one aldehyde of formula **W:** 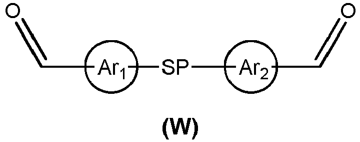 in which:
- each Ar₁ and Ar₂ group represents, independently of one another, an optionally substituted aromatic ring; and
- SP is a connecting group that connects at least the Ar₁ and Ar₂ groups to one another, SP separating the Ar₁ and Ar₂ groups by at least 2 covalent bonds.

2. Composition according according to the preceding claim, in which SP represents an at least divalent radical selected from the group consisting of a hydrocarbon-based radical and a substituted hydrocarbon-based radical.

3. Composition according to any one of the preceding claims, in which SP separates the Ar₁ and Ar₂ groups by a number of covalent bonds greater than or equal to 3, preferably greater than or equal to 4 and more preferentially greater than or equal to 5 and by a number of covalent bonds less than or equal to 20, preferably less than or equal to 15.

4. Composition according to any one of the preceding claims, in which the molar mass of the aldehyde is less than or equal to 10 000 g.mol⁻¹, preferably less than or equal to 5000 g.mol⁻¹, and more preferentially less than or equal to 2000 g.mol⁻¹ and even more preferentially less than or equal to 500 g.mol⁻¹.

5. Composition according to any one of the preceding claims, in which the aldehyde is of formula **W3:** 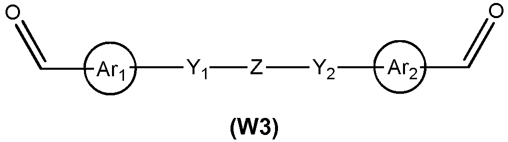 in which Y₁-Z-Y₂ represents a divalent radical in which:
- Y₁ and Y₂ each represent, independently of one another, a group selected from the group consisting of oxygen, a CH₂ group, a C=O group, an S=O group and an SO₂ group, preferably from the group consisting of oxygen, a C=O group, an S=O group and an SO₂ group, and more preferentially Y₁ and Y₂ each representing oxygen; and
- Z represents a divalent radical selected from the group consisting of a hydrocarbon-based radical and a substituted hydrocarbon-based radical.

6. Composition according to the preceding claim, in which Z represents a divalent radical selected from the group consisting of the following radicals: alkylene, arylene, arylalkylene, alkylarylene, cycloalkylene, alkenylene, AL-AR-AL with AL representing alkyl monovalent radicals and AR representing an aryl group, AR-AL-AR with AR representing aryl monovalent radicals and AL representing an alkyl group,
- preferably from the group consisting of the following radicals: alkylene, AL-AR-AL with AL representing alkyl monovalent radicals and AR representing an aryl group, AR-AL-AR with AR representing aryl monovalent radicals and AL representing an alkyl group,
- and more preferentially Z represents an alkylene divalent radical.

7. Composition according to Claim 5 or 6, in which Z represents a linear alkylene divalent radical comprising a number of carbon atoms ranging from 1 to 15, preferably from 2 to 12 and more preferentially from 2 to 8.

8. Composition according to any one of Claims 1 to 4, in which SP represents a radical selected from the group consisting of polyester, polyether, polydiene, polyalkylene and polysilicone radicals and the combinations of these radicals, preferably from the group consisting of polyether and polysilicone radicals and the combinations of these radicals.

9. Composition according to any one of of the preceding claims, in which the aromatic polyphenol is selected from the group consisting of resorcinol, phloroglucinol, 2,2',4,4'-tetrahydroxydiphenyl sulfide, 2,2',4,4'-tetrahydroxybenzophenone and the mixtures of these compounds, preferably the aromatic polyphenol is phloroglucinol.

10. Composition according to any one of the preceding claims, in the cured state.

11. Rubber composition, **characterized in that** it comprises:
- at least one aromatic polyphenol comprising at least one aromatic ring bearing at least two -O-H groups in the meta position relative to one another, the two positions ortho to at least one of the -O-H groups being unsubstituted; and
- at least one aldehyde of formula **W:** 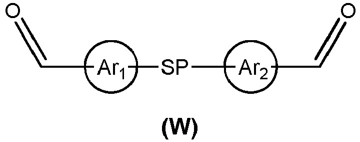 in which:
- each Ar₁ and Ar₂ group represents, independently of one another, an optionally substituted aromatic ring; and
- SP is a connecting group that connects at least the Ar₁ and Ar₂ groups to one another, SP separating the Ar₁ and Ar₂ groups by at least 2 covalent bonds.

12. Method for manufacturing a rubber composition in the uncured state, **characterized in that** it comprises a step of mixing:
- at least one aromatic polyphenol comprising at least one aromatic ring bearing at least two -O-H groups in the meta position relative to one another, the two positions ortho to at least one of the -O-H groups being unsubstituted; and
- at least one aldehyde of formula **W:** 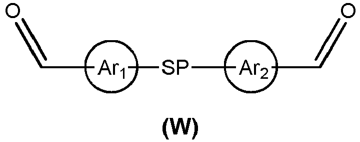 in which:
- each Ar₁ and Ar₂ group represents, independently of one another, an optionally substituted aromatic ring; and
- SP is a connecting group that connects at least the Ar₁ and Ar₂ groups to one another, SP separating the Ar₁ and Ar₂ groups by at least 2 covalent bonds.

13. Method for manufacturing a rubber composition in the cured state, **characterized in that** it comprises:
- a step of manufacturing a rubber composition in the uncured state comprising a step of mixing:
- at least one aromatic polyphenol comprising at least one aromatic ring bearing at least two -O-H groups in the meta position relative to one another, the two positions ortho to at least one of the -O-H groups being unsubstituted; and
- at least one aldehyde of formula **W:** 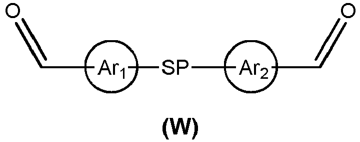 in which:
- each Ar₁ and Ar₂ group represents, independently of one another, an optionally substituted aromatic ring; and
- SP is a connecting group that connects at least the Ar₁ and Ar₂ groups to one another, SP separating the Ar₁ and Ar₂ groups by at least 2 covalent bonds,
- then, a step of shaping the rubber composition in the uncured state,
- then, a step of vulcanizing the rubber composition during which a phenol-aldehyde resin based on the aromatic polyphenol and on the aldehyde is crosslinked.

14. Use of an aldehyde of formula **W:** 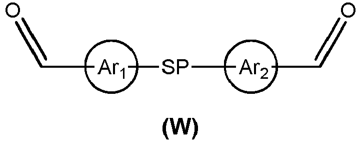 in which:
- each Ar₁ and Ar₂ group represents, independently of one another, an optionally substituted aromatic ring; and
- SP is a connecting group that connects at least the Ar₁ and Ar₂ groups to one another, SP separating the Ar₁ and Ar₂ groups by at least 2 covalent bonds,
- in a rubber composition comprising a phenol-aldehyde resin based on at least one aromatic polyphenol and on at least the aldehyde for increasing the stiffness of the rubber composition; and/or
- for increasing the fluidity in the uncured state of a rubber composition comprising a phenol-aldehyde resin based on at least one aromatic polyphenol and on at least the aldehyde; and/or
- for retaining the stiffness with the increase in temperature of a rubber composition comprising a phenol-aldehyde resin based on at least one aromatic polyphenol and on at least the aldehyde.

15. Tyre (1), **characterized in that** it comprises a rubber composition according to any one of Claims 1 to 10.
